# EUROPEAN PATENT SPECIFICATION

(11) **EP 1 244 258 B1**
(45) Date of publication and mention of the grant of the patent: **18.11.2009**
(21) Application number: 02251705.6
(22) Date of filing: 11.03.2002
(51) Int. Cl.: H04L 12/56, H04N 1/00, H04L 12/58, H04L 29/06

(54) **Radio communication apparatus for transferring image data from an image storing apparatus to the public network**
Funkkommunikationsgerät zur Bilddatenübertragung von einer Bildspeichervorrichtung zum öffentlichen Netzwerk
Dispositif de communication radio pour le transfert de données d'image d'un appareil de stockage d'images vers le réseau publique

(30) Priority: 21.03.2001 JP 2001081233; 19.07.2001 JP 2001220426
(43) Date of publication of application: 25.09.2002
(73) Proprietor: CANON KABUSHIKI KAISHA, Tokyo (JP)
(72) Inventor: Myojo, Toshihiko, Ohta-ku, Tokyo (JP)
(74) Representative: Hitching, Peter Matthew

(56) References cited:
- EP-A- 0 844 781
- EP-A- 0 975 132
- WO-A-00/33562
- US-A- 5 806 005

## Description

### BACKGROUND OF THE INVENTION

### Field of the Invention

The present invention relates to a radio communication apparatus for performing local radio communication.

### Related Background Art

The recent diffusion of the Internet enables us to send out and receive e-mail or to acquire information by accessing the Web easily. Thereby, a personal computer (hereinafter referred to as a "PC") having a public line connection function is rapidly spreading.

At the same time, the radio communication lines for mobile radio telephones are digitized. Thereby, a digital radio telephone represented by the personal handyphone system (PHS) and a cellular phone becomes capable of realizing a character mail function and a simplified Web browser function. Moreover, a telephone service corresponding to an Internet standard protocol has also been put on the market recently. Then, it is expected that digital radio telephones having functions similar to the e-mail function and the Web accessing function that are installed in a PC will be spread.

In the e-mail system and the Web, many image data are dealt with. As an image processing method, it is general that an image desired to be transferred is temporarily taken into a PC from a scanner or a digital still camera (hereinafter referred to as a "digital camera") and the taken image is transferred by being attached to e-mail or is uploaded to a home page.

A dedicated digital interface or Universal Serial Bus (USB) has conventionally been used for taking in an image. However, a local radio interface system for transmitting data locally is examined in place of cables for solving the troublesomeness of connecting the cables.

However, in the case where image data are taken in a communication apparatus, which is equipped with a public line communication function, such as a PC or a cellular phone from an image storing apparatus such as a digital camera and then the taken image data are transferred to a desired place from the communication apparatus, the operations of the communication apparatus are required. Consequently, the local radio interface system has a problem of the troublesomeness of the operations of the communication apparatus.

As a method to solve this problem, it is considerable to transfer image data from an image storing apparatus, into which a public line communication application has been installed, to an e-mail address or the Web by executing the dial-up connection using the modem function of a communication apparatus. However, this configuration brings up a problem of the increase of the costs of the image storing apparatus.

EP 0 975 132 describes a telecommunication system having a mobile phone and a camera unit. Both units have connectors for making a disconnectable connection and the mobile phone can be used to control at least a part of the functionality of the camera unit.

In one aspect, a radio communication apparatus is provided as set out in claim 1.

In another aspect, a radio communication method is provided as set out in claim 5.

In order that the invention may be more readily understood embodiments thereof will now be described by way of example and with reference to the accompanying drawings, in which:
Fig. 1 is a schematic diagram of a system for implementing a data transferring method according to a first embodiment of the present invention;
Fig. 2 is a back elevation of a digital camera 101;
Fig. 3 is a block diagram showing the configuration of the digital camera 101;
Fig. 4 is a block diagram showing the configuration of a cellular phone 201;
Fig. 5 is the first half part of a flowchart showing the control of the local communication mode in the digital camera 101 for executing the data transferring method according to the first example;
Fig. 6 is the second half part of the flowchart showing the control of the local communication mode in the digital camera 101 for executing the data transferring method according to the first example;
Fig. 7 is a flowchart showing the control of the local communication mode in the cellular phone 201 for executing the data transferring method according to the first example;
Fig. 8 is a flowchart showing the mail transmission processing according to the first example;
Fig. 9 is a sequence chart showing a local communication sequence between the digital camera 101 and the cellular phone 201 according to the first example;
Fig. 10 is a view illustrating various screens displayed on a display part 102 during the local communication mode;
Fig. 11 is another view illustrating various screens displayed on the display part 102 during the local communication mode;
Fig. 12 is the first half part of a flowchart showing the control of the local communication mode of the digital camera 101 for executing a data transferring method according to a second example;
Fig. 13 is the first half part of a flowchart showing the control of the local communication mode of the cellular phone 201 for executing the data transferring method according to the second example;
Fig. 14 is the second half part of the flowchart showing the control of the local communication mode of the cellular phone 201 for executing the data transferring method according to the second example;
Fig. 15 is a flowchart showing the mail transmission processing according to the second example;
Fig. 16 is a view illustrating various screens displayed on the display part 102 during the local communication mode;
Fig. 17 is a sequence chart showing a local communication sequence between the digital camera 101 and the cellular phone 201 according to the second example;
Fig. 18 is a flowchart showing a transfer operation in the control of the local communication mode of the digital camera 101 for executing a data transferring method according to a first embodiment;
Fig. 19 is the second half part of the flowchart showing the control of the local communication mode of the digital camera 101 for executing the data transferring method according to the first embodiment;
Fig. 20 is the second half part of the flowchart showing the control of the local communication mode of the cellular phone 201 for executing the data transferring method according to the first embodiment;
Fig. 21 is a sequence chart showing a local communication sequence between the digital camera 101 and the cellular phone 201 according to the first embodiment; and
Fig. 22 is another schematic diagram of the system for implementing the data transferring method.

### DETAILED DESCRIPTION OF THE PREFERRED EMBODIMENTS

### (First Example)

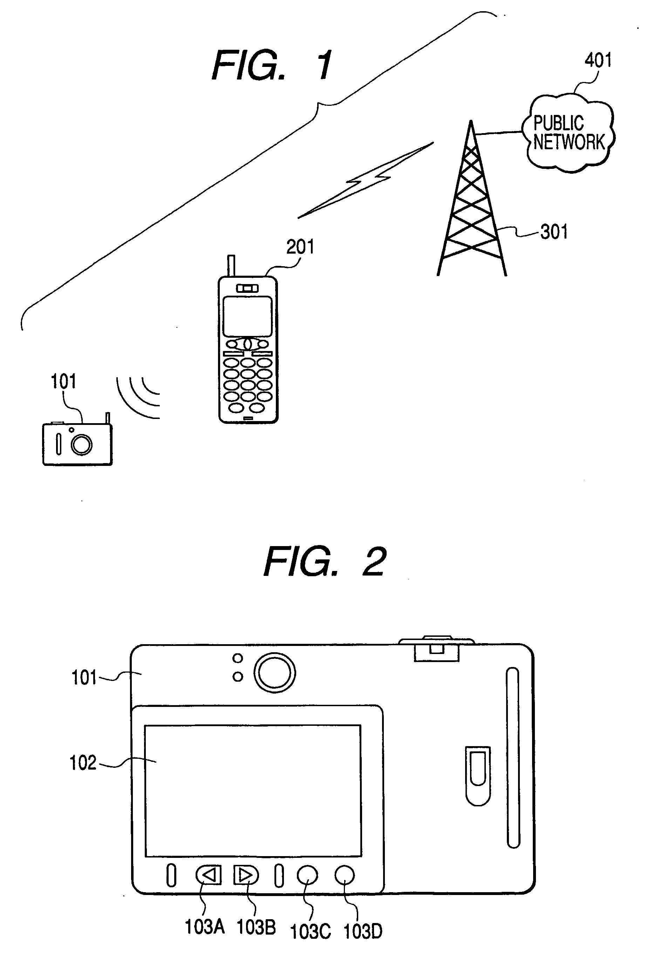

Fig. 1 is a schematic diagram of a system according to a first example.

As shown in Fig. 1, the system is composed of a digital camera (or an image storing apparatus) 101 having a local communication function for transmitting image data by radio, a cellular phone (or a radio communication apparatus) 201 having the local communication function for receiving the image data from the digital camera 101 and a transmit-receive function for transmitting and receiving mail by the use of a public line, a public radio base station 301, and a public line network 401 through which the cellular phone 201 transmits image data.

Incidentally, the image storing apparatus is not restricted to the digital camera 101. The image storing apparatus may be a video camera having an input/output function of a time-varying image, a personal digital assistant (PDA) having a function of storing an image data as a digital data temporarily or permanently and a function of outputting the stored image data (e.g. an image server function), or the like.

Moreover, the radio communication apparatus is not restricted to the cellular phone 201. The radio communication apparatus may be a digital radio telephone such as a personal handyphone system (PHS), a PC having a line connection function, or the like.

Fig. 2 is a back elevation of the digital camera 101 in Fig. 1.

As shown in Fig. 2, a display part 102 for the ascertainment of an object, the ascertainment of a photographed image, and the displaying of a communication setting menu and the like is disposed on the back face of the digital camera 101. Switches 103A, 103B and 103C for performing the operations of the digital camera 101 such as a change of reproduced images and the selection of key inputs on a software keyboard are disposed below the display part 102. A mode changing switch 103D is a switch for making the display part 102 display a menu of a local communication mode for the communication of the digital camera 101 with the cellular phone 201.

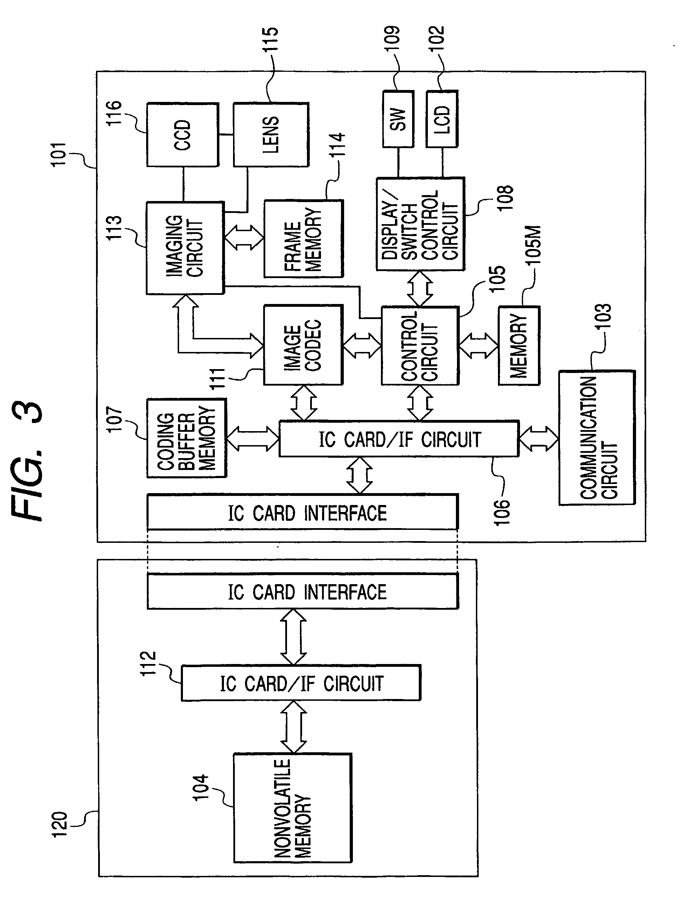

Fig. 3 is a block diagram showing the configuration of the digital camera 101. Hereupon, the configuration of the main body of the digital camera 101 and the configuration of a memory card 120 mounted on the main body of the digital camera 101 are shown.

In the figure, the reference numeral 101 designates the digital camera, and the reference numeral 120 designates the memory card. In the memory card 120, a reference numeral 104 designates a nonvolatile memory being, for example, a flash read only memory (flash ROM). The memory card 120 is used for storing photographed image data. A reference numeral 112 designates an integrated circuit (IC) card interface circuit. The IC card interface circuit 112 is used when the memory card 120 performs the transmission or the reception of data with the main body of the digital camera 101.

In the main body of the digital camera 101, a reference numeral 103 designates a communication circuit for performing the local communication of the main body of the digital camera 101 with a communication apparatus such as the cellular phone 201. The communication circuit 103 includes a control protocol, for example, for performing radio transmission. A reference numeral 105 designates a control circuit for controlling the operation of the main body of the digital camera 101. A reference numeral 105M designates a memory.

A reference numeral 106 designates an IC card interface circuit. The IC card interface circuit 106 is used when the main body of the digital camera 101 performs the transmission or the reception of data with the memory card 120. A reference numeral 107 designates a buffer memory. The buffer memory 107 temporarily stores photographed image data after their coding by, for example, Joint Photographic Experts Group (JPEG). A reference numeral 108 designates a display/switch control circuit. The display/switch control circuit 108 controls switches 109 and the display part 102 composed of a liquid crystal image display (hereinafter referred to as an "LCD").

The reference numeral 109 designates various switches composed of the switches 103A, 103B and 103C and the mode changing switch 104, which are shown in Fig. 2, and a photograph switch for instructing the digital camera 101 to perform photographing, a menu switch for instructing the digital camera 101 to display a menu, and the like. The reference numeral 102 designates the display part being the LCD. The display part 102 displays an image when a user decides an image to be photographed or ascertains an image that has already been photographed.

A reference numeral 111 designates an image codec for performing the compression, the coding processing and the decoding of image data. A reference numeral 113 designates an imaging circuit. The imaging circuit 113 conforms to instructions from the control circuit 105 and controls an optical system such as a zoom lens 115. The imaging circuit 113 also performs the image processing of an image signal from a photoelectric conversion element 116 being a charge coupled device (CCD) to image data. A reference numeral 114 designates a frame memory for storing non-compressed image data generated by the imaging circuit 113.

Next, the detailed configuration of the cellular phone 201 is described.

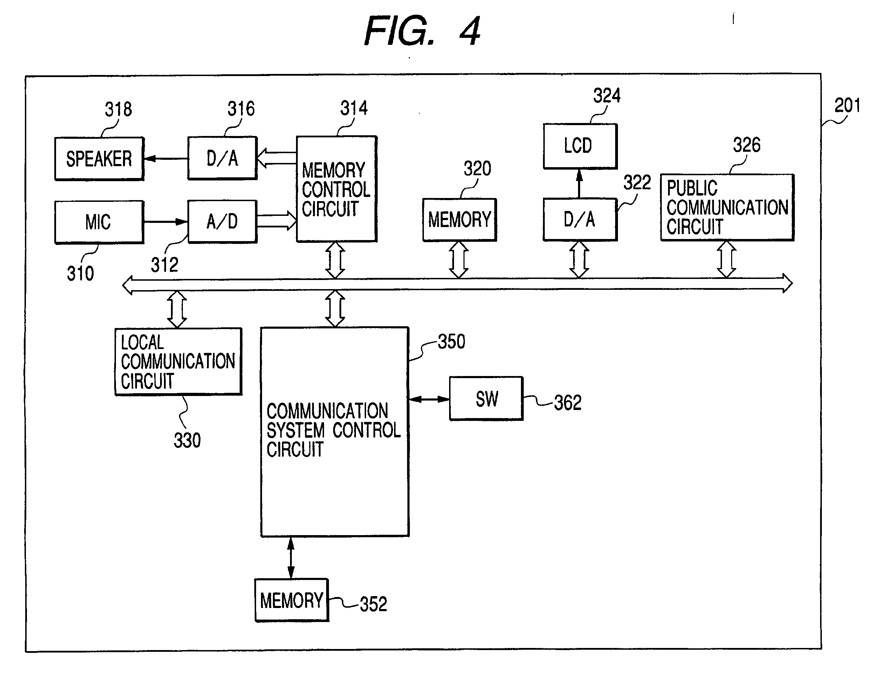

As shown in Fig. 4, the cellular phone 201 comprises a microphone 310, a speaker 318, an analogue-digital (A/D) converter 312, a digital-analogue (D/A) converter 316, a memory control circuit 314, a buffer memory 320, a D/A converter 322, an LCD 324, a public communication circuit 326, a local communication circuit 330, a communication system control circuit 350, a memory 352 and a switch 362.

The buffer memory 320 stores voices picked up by the microphone 310, and/or static images or dynamic images that are transmitted from the digital camera 101. The buffer memory 320 has a storage capacity sufficient for storing voices for a predetermined time, a predetermined number of sheets of static images and/or dynamic images for a predetermined time. The D/A converter 322 converts static image data or dynamic image data that are stored in the buffer memory 320 into analog signals to output the analog signals to the LCD 324 as image signals. The LCD 324 displays the image signals from the D/A converter 322. Moreover, the buffer memory 320 is also used as a working area of the communication system control circuit 350.

The public communication circuit 326 has long-range radio communication functions such as time division multiple access (TDMA), code division multiple access (CDMA), wide-band code division multiple access (W-CDMA), and the like. The public communication circuit 326 is connected with the public radio base station 301 through a communication line.

The local communication circuit 330 has a short-range high-speed data communication function using, for example, spread spectrum communication. The local communication circuit 330 connects the cellular phone 201 with another device such as the digital camera 101.

Incidentally, the local communication function used in the present example employs a digital radio communication technique such as a radio communication interface using a frequency hopping process.

The communication system control circuit 350 controls the whole of the cellular phone 201. The memory 352 stores constants, variables, programs and the like that are used for the operation of the communication system control circuit 350. The memory 352 is, for example, a ROM.

The switch 362 is for inputting various operation instructions to the communication system control circuit 350. The switch 362 is composed of a combination of a unit of or a plurality of switches, dials, touch panels, voice recognition units and the like. The switch 362 can be used for the operations such as the turning on or off of the power source of the cellular phone 201, the execution of a call (on-hook) or the nonexecution of a call (off-hook), the input of a telephone number, the retrieval of a telephone number, the changing of a communication mode, and the like.

Next, the main processing of the local communication mode in the digital camera 101 is described.

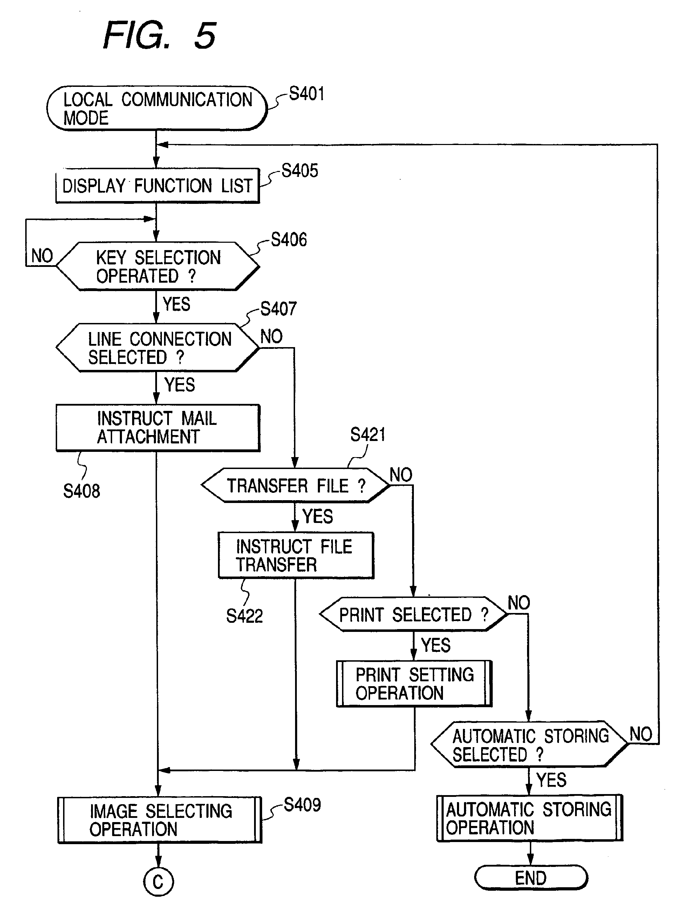

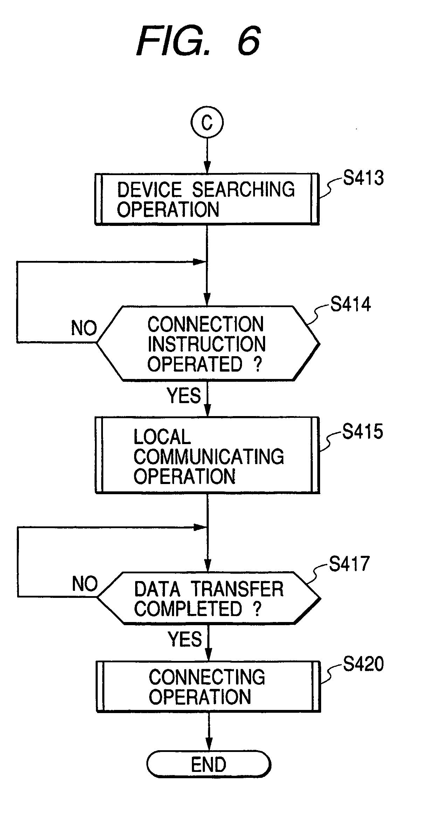

Figs. 5 and 6 are flowcharts showing the control of the local communication mode in the digital camera 101 for executing the data transferring method according to the first example.

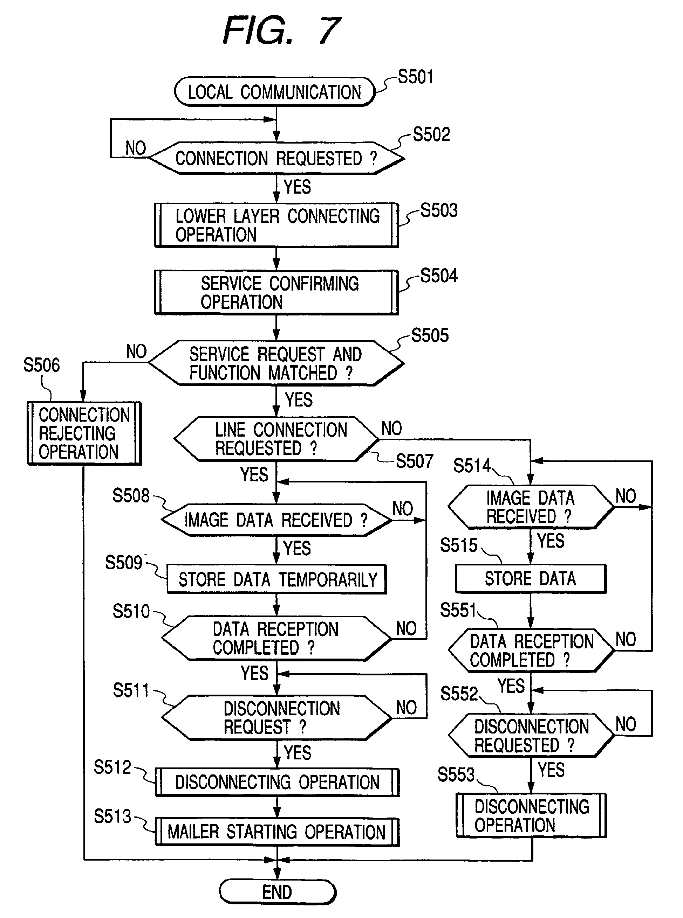

Fig. 7 is a flowchart showing the control of the local communication mode in the cellular phone 201 for executing the data transferring method according to the first example.

These flowcharts exhibit the programs of the control circuit 105 stored in the memory 105M.

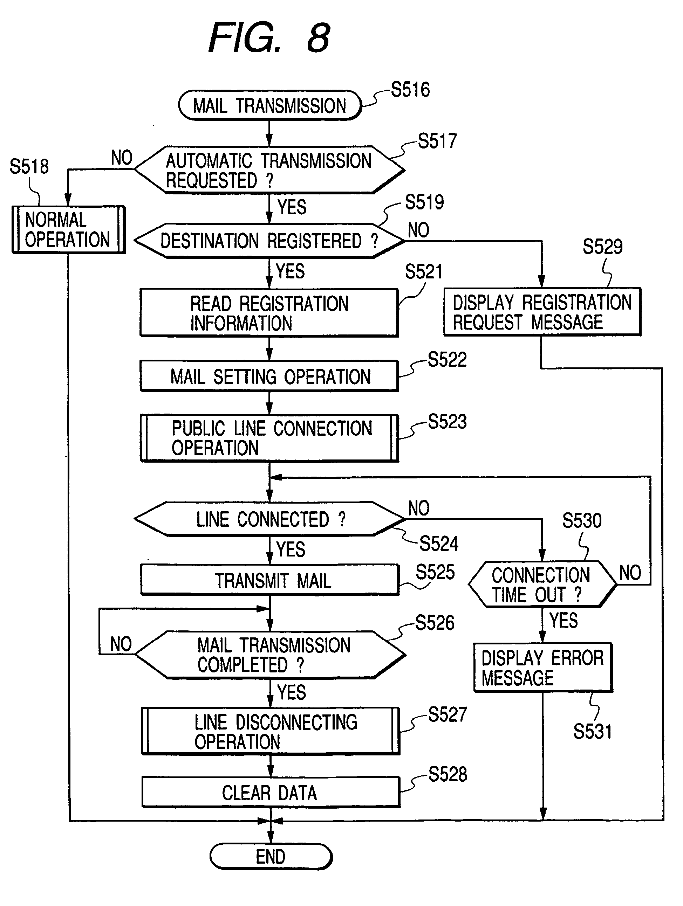

Fig. 8 is a flowchart showing the mail transmission processing after the completion of the local communication.

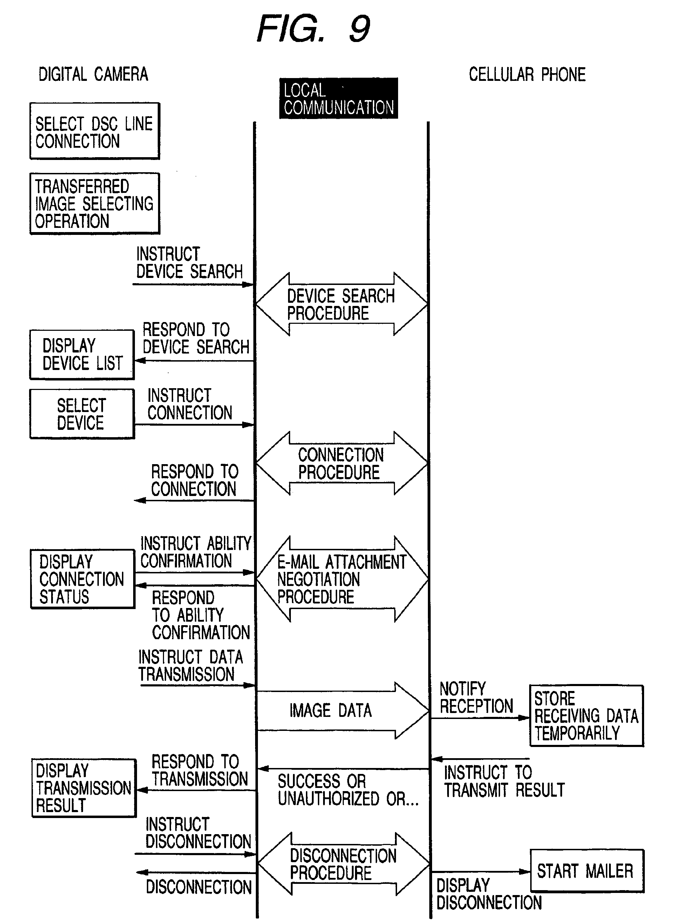

Fig. 9 is a sequence chart showing a local communication sequence between the digital camera 101 and the cellular phone 201 in Fig. 1.

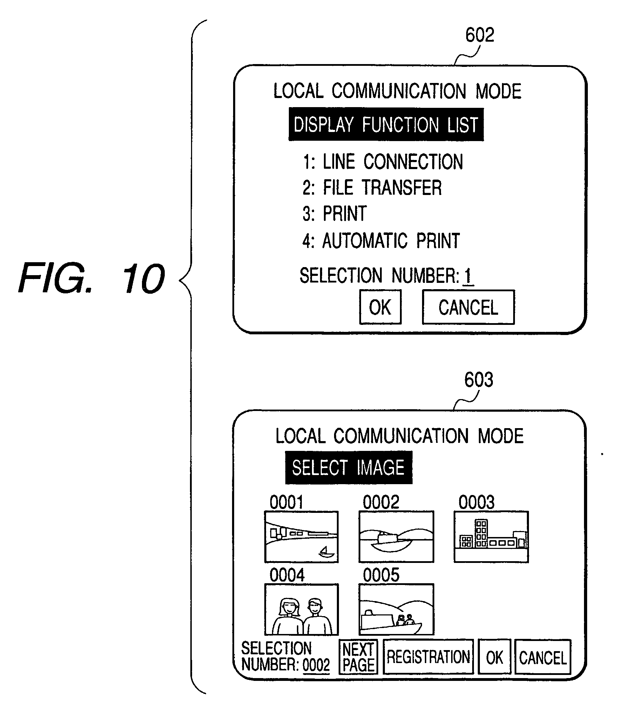

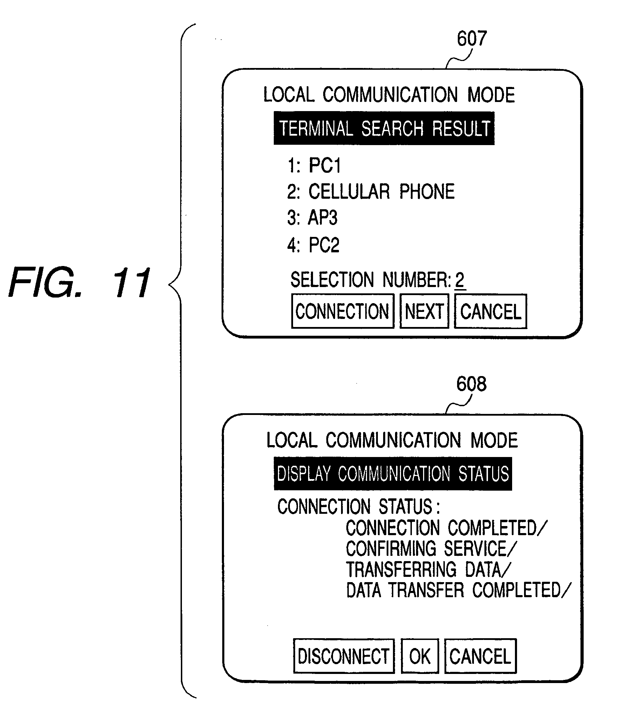

Figs. 10 and 11 are views illustrating various screens displayed on the display part 102 during the local communication mode.

When the mode changing switch 104 of the digital camera 101 is depressed, the digital camera 101 shifts to the local communication mode (Step S401) shown in Fig. 5.

Thereby, a list display menu screen 602 (see Fig. 10) of the functions usable in local communication is displayed on the display part 102 of the digital camera 101 (Step S405). When a user performs a key selection operation by operating the switches 103A, 103B and 103C (the result of a judgment at Step S406 is a yes) to select the line connection in the list display menu screen 602 (the result of a judgment at Step S407 is a yes), the digital camera 101 shifts to a mail attachment instruction step (Step S408), and the digital camera 101 temporarily stores the selection information (or operation instruction information) concerning the selection of the line connection.

When the user does not select the line connection in the list display menu screen 602 (the result of a judgment at Step S407 is a no) to select the file transfer (the result of a judgment at Step S421 is a yes), the digital camera 101 shifts to a file transfer step (Step S422), and the digital camera 101 temporarily stores the selection information concerning the selection of the file transfer in the memory 105M. When the digital camera 101 has temporarily stored these pieces of selection information, the digital camera 101 shifts to an image selection operation (Step S409) for selecting an image to be transferred.

Incidentally, when the print is selected in the list display menu screen 602, the digital camera 101 temporarily stores the selection information concerning the selection of the print. When the automatic storing is selected, the digital camera 101 temporarily stores the selection information concerning the selection of the automatic storing.

Hereupon, the image selection operation is described.

When the digital camera 101 begins the image selection operation at Step S409, the digital camera 101 acquires the data of the thumbnails to be displayed on the display part 102 from the memory card 120, and the digital camera 101 performs the display of the selected images. Thereby, an image selection menu screen 603 is displayed on the display part 102. When the user selects the number of a thumbnail image or the thumbnail image itself that is displayed on the display part 102 and performs the registration operation thereof by operating the switches 103A, 103B and 103C, the digital camera 101 stores the file name (or the selected file number) of the selected image as a registration datum. When the user selects a plurality of images, the plurality of images is registered by the repetition of the aforesaid selection operation and the registration operation.

When the user selects the image selection completion after the completion of a series of the registration operations, the digital camera 101 stores the registered image selection information into the memory 105M or the memory card 120 as a file. And then, the digital camera 101 ends the image selection operation processing to shift to a device searching step (Step S413).

When the digital camera 101 shifts to the device searching operation (Step S413) (see Fig. 6), the digital camera 101 transmits inquiry signals to local communication apparatuses in its communication range by means of the communication circuit 103.

The digital camera 101 displays a list of terminals, or the local communication apparatuses, from which the digital camera 101 has received response signals, on a terminal search result display menu screen 607. Then, the digital camera 101 judges whether or not the user has performed a connection instruction operation to a certain terminal (e.g. the cellular phone) (Step S414).

When the user operated the switches 103A, 103B and 103C to select a local communication terminal and the user instructed the connection to the selected terminal (the result of a judgment at Step S414 is a yes), the digital camera 101 executes the processing of a local communication operation (Step S415) by means of the communication circuit 103. In the processing, the digital camera 101 first performs the connection with the selected terminal by a lower protocol, and then, on the basis of the operation instruction information (e.g. a mail attachment instruction selected at the line connection selection (Step S407)) selected at the function selection steps (Step S406 and Step S407) before, the digital camera 101 transmits a transmission request of mail attachment image data by a higher protocol. The digital camera 101 displays the message of under connection in a communication state display menu screen 608 on the display part 102 during the connection by the lower protocol.

When the cellular phone 201 receives the requirement, the cellular phone 201 analyses the transmission request of the mail attachment image data. When the cellular phone 201 supports the function, the cellular phone 201 holds the request, and then the cellular phone 201 begins to wait to receive image data to be successively transferred.

The digital camera 101 displays the message of under confirmation of service in the communication state display menu screen 608 on the display part 102 while the digital camera 101 is confirming whether the cellular phone 201 has received the transmission request of the mail attachment image data or not, or while the digital camera 101 ascertains the faculty of the cellular phone 201.

After the cellular phone 201 received the request, the digital camera 101 reads an image file from the memory card 120 on the basis of the image selection information registered at Step S409, and the digital camera 101 begins to transfer the image file from the communication circuit 103 to the cellular phone 201. The digital camera 101 displays the message of under data transfer in the communication state display menu screen 608 on the display part 102 while the digital camera 101 is transferring the data. Then, when the digital camera 101 has finished the transfer of all of the registered image data and the digital camera 101 has received a result response indicating the successful reception of the data from the cellular phone 201 (the result of a judgment at Step S417 is a yes), the digital camera 101 displays the message of the completion of the data transfer in the communication state display menu screen 608 on the display part 102. After that, the digital camera 101 shifts to its disconnection operation of the local communication channel (Step S420) and performs the disconnection thereof. And then, the digital camera 101 displays the list display menu screen 602 on the display part 202, and completes a series of the operations.

Next, Fig. 7 is referred while the control of the local communication mode in the cellular phone 201 is described. Incidentally, Fig. 7 shows a part of the program stored in the memory 352. The communication system control circuit 350 is a circuit that reads the program from the memory 352 and operates in conformity with the program. The memory 352 is a storage medium storing the program in a state capable of being read by the communication system control circuit 350. Incidentally, the program may be received from the public communication circuit 326 or the local communication circuit 330 to be stored in the memory 352.

In the following, the operation of the cellular phone 201 executed under the control of the communication system control circuit 350 operating in conformity to the program shown in Fig. 7 is described.

In the processing of Fig. 7, when a connection request is transmitted from the digital camera 101 to the cellular phone 201 by local communication, the connection request is received by the local communication circuit 330 (the result of a judgment at Step S502 is a yes). Then, the cellular phone 201 first performs a connection operation with the local communication circuit 330 in conformity with the lower protocol like the operation of the digital camera 101 (Step S503). After the completion of the connection in conformity with the lower protocol, the cellular phone 201 analyses a request concerning image data reception processing in conformity with the higher protocol to executes a service confirming operation (Step S504).

When the cellular phone 201 does not have the service of the function corresponding to the received service request (i.e. the case where the requested service and the function of the cellular phone 201 do not agree with each other) (the result of a judgment at Step S505 is a no) in the service confirming operation, the cellular phone 201 informs the digital camera 101 of the disagreement of the service and disconnects the communication path connected in conformity with the lower protocol to end the present processing in the connection rejecting operation thereof (Step S506). When the digital camera 101 is informed of the disagreement of the services, the digital camera 101 receives the information at Step S415 in Fig. 6, and performs the disconnection operation at Step S420.

Moreover, when the requested service is a function supported by the cellular phone 201 (the result of a judgment at Step S505 is a yes), the cellular phone 201 judges the kind of the requested processing (Step S507), and performs the processing according to the result of the judgment. Incidentally, in the present embodiment, it is supposed that the services to be treated by the cellular phone 201 are only the line connection and the file transfer for the simplification of the description. However, it is possible to add judgments corresponding to other services.

When the request is the file transfer of image data (the result of a judgment at Step S507 is a no), the cellular phone 201 shifts to an image data reception step (Step S514). And when the cellular phone 201 receives the image data through the local communication circuit 330 (the result of a judgment at Step S514 is a yes), the cellular phone 201 stores the received image data in the buffer memory 320 thereof (Step S515). The processing continues until all of the image data have been received (Step S551). When the cellular phone 201 receives a disconnection request from the digital camera 101 through the local communication circuit 330 (Step S552), the cellular phone 201 executes the disconnection operation thereof at the local communication circuit 330 (Step S553) to end the operations thereof.

On the other hand, when the request is a transmission request of mail attachment (the result of a judgment at Step S507 is a yes), the cellular phone 201 shifts to an image data reception step (Step S508), and the cellular phone 201 similarly receives image data through the local communication circuit 330 (the result of a judgment at Step S508 is a yes) to store the received image data into the buffer memory 320 temporarily (Step S509). Next, the cellular phone 201 judges the completion of data reception (Step S510). The cellular phone 201 repeats the operation until it has received all of the image data. As a result of the judgment at Step S510, when the cellular phone 201 has completed the reception of all the image data (the result of the judgment at Step S510 is a yes), the cellular phone 201 transmits a reception result indicating the successful reception of the data to the digital camera 101, and judges the existence of a disconnection request from the digital camera 101 (Step S511).

When the cellular phone 201 receives a disconnection request from the digital camera 101 through the local communication circuit 330, the cellular phone 201 disconnects the local communication path by executing a disconnection operation of the local communication circuit 330 (Step S512). And then, the cellular phone 201 automatically starts an application necessary for transferring mail to the public line by the mailer starting operation (Step S513), and ends the local communication. At the mailer starting operation at Step S512, the cellular phone 201 secures a working area necessary for the buffer memory 320.

Fig. 8 shows an e-mail program stored in the memory 352. The communication system control circuit 350 is a computer that reads the e-mail program from the memory 352 to operate in conformity with the e-mail program. The memory 352 is a storage medium storing the program in a state capable of being read by the communication system control circuit 350.

Next, a mail transmission operation of the cellular phone 201 performed under the control of the communication system control circuit 350 operating in conformity with the program shown in Fig. 8 is described.

In conformity with the mail transmitting program started at Step S513 in the local communication mode of the cellular phone 201, the cellular phone 201 first ascertains whether the starting factor is a transmission request of mail attachment image data through local communication or not at a judgment step of the existence of an automatic transmission request (Step S517) after the completion of the local communication processing.

When the result of the judgment indicates a starting caused by a normal operation (the result of a judgment at Step S517 is a no), the cellular phone 201 shifts to a normal operation step (Step S518) to perform a normal mail operation. That is, in the case where the cellular phone 201 is started by a mail starting operation such as the depression of a mail button in the switch 362, the cellular phone 201 transmits mail having contents inputted by a ten key in the switch 362 or the like from the public communication circuit 326 to a transmission destination through the public radio base station 301.

Moreover, when the cellular phone 201 judges that the starting is caused by a transmission request of mail attachment image data (the result of a judgment at Step S517 is a yes), the cellular phone 201 shifts to a step for judging the existence of registered destination (Step S519). At Step S519, the cellular phone 201 ascertains whether the mail transmission destination in the case where the cellular phone 201 receives the transmission request of mail attachment image data through local communication is registered or not. When the mail transmission destination is not registered (the result of the judgment at Step S519 is a no), the cellular phone 201 shifts to a registration request message displaying step (Step S529).

At Step S529, the cellular phone 201 displays a massage indicating destination registration on the LCD 324 of the cellular phone 201, and the cellular phone 201 suspends the automatic transmission operation of mail to end the present processing. In this case, the image data received through the local communication is in a state of being stored in the buffer memory 320 temporarily. When the memory 352 has a free space at this time, the cellular phone 201 may store the data in the memory 352 similarly to the data transfer operation. After that, the user shifts to the normal operation at Step S518, and assigns the transmission destination of the image data stored in the buffer memory 320 or the memory 352 with the ten key or the like in the switch 362. Then, the cellular phone 201 transmits the image data stored in the buffer memory 320 or the memory 352 from the public communication circuit 326 to the assigned destination.

On the other hand, in the case where the information such as the destination address of mail or the like has previously been registered in the memory 352 (the result of the judgment at Step S519 is a yes), the cellular phone 201 reads the registered information such as a destination address or the like (Step S521). Next, the cellular phone 201 executes a setting including the attachment of images to mail at a mail setting operation step (Step S522), and then executes a public line connection operation (Step S523).

At Step S523, first, the cellular phone 201 connects with the public radio base station 301 with a line by means of the public communication circuit 326. And, successively, the cellular phone 201 performs the connection with a mail server through the public line network 401. Then, the cellular phone 201 judges the line connection state at a line connection judgment step (Step S524). When no lines are connected (the result of a judgment at Step S524 is a no), a connection timer becomes time out (the result of a judgment at Step S530 is a yes) in the case where the line has a trouble such that the cellular phone 201 is out of the communication range or the like. Accordingly, the cellular phone 201 displays an error message on the LCD 324 (Step S531). Then, the mail automatic transmission operation is terminated. The image data stored temporarily at this time may be stored in the buffer memory 320 temporarily or be stored in the memory 352 similarly to the error processing in the case where the address is not registered.

When the line connection is completed and mail transmission becomes possible (the result of a judgment at Step S524 is a yes), the cellular phone 201 attaches image data to the mail set at Step S522, and transmits the mail to a mail server from the public communication circuit 326 (Step S525). After the completion of the mail transmission (the result of a judgment at Step S526 is a yes), the cellular phone 201 disconnects the public line with the public communication circuit 326 at a line disconnecting operation step (Step S527). In succession, the cellar phone 201 clears the image data stored in the buffer memory 320 temporarily (Step S528).

### (Second Example)

A data transferring method according to a second example is described next. Incidentally, because a system for realizing the data transferring method is composed of the digital camera 101, the cellular phone 201 and the public line network 401 like the system of the first example, descriptions concerning them are omitted.

In the first example, as shown at Step S519 and Step S521 in Fig. 8, when a user performs line connection by the use of the digital camera 101, the user previously registers information such as the mail address of a transferring destination, a message and the like in the cellular phone 201 having a public line connection function, and the user makes the cellular phone 201 transfer image data by the use of the registered information in response to a request from the digital camera 101 by means of local communication.

The present second example is configured to be equipped with an additional function of transferring the connection information of a line and the like in local communication from an image input/output apparatus to enable the selection of the method of image data transfer between the method of transferring the image data on the basis of registered information and the method of transferring the image data on the basis of the transferred new information.

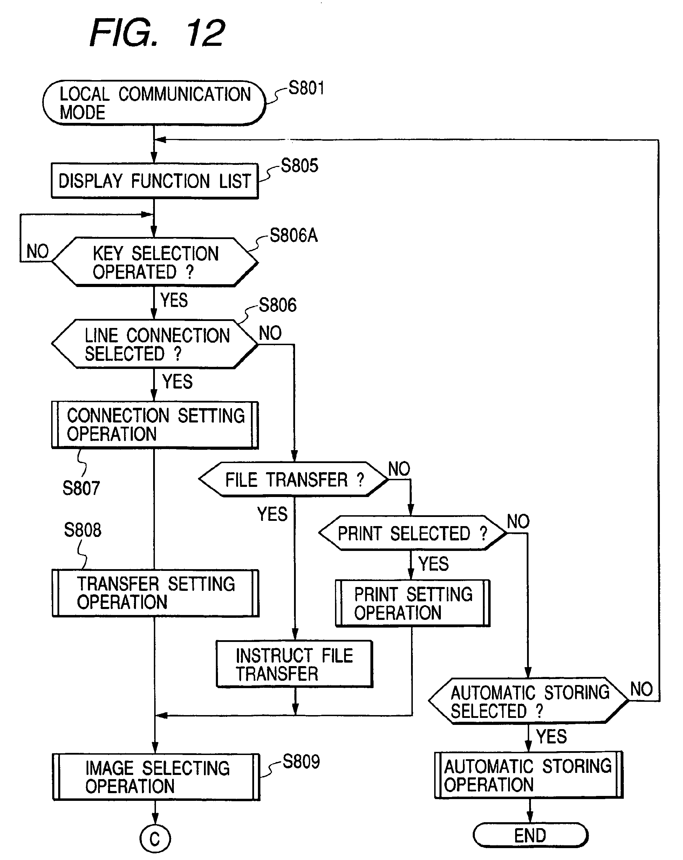

Fig. 12 is a flowchart showing the control of the local communication mode of the digital camera 101 for executing the data transferring method according to the second example.

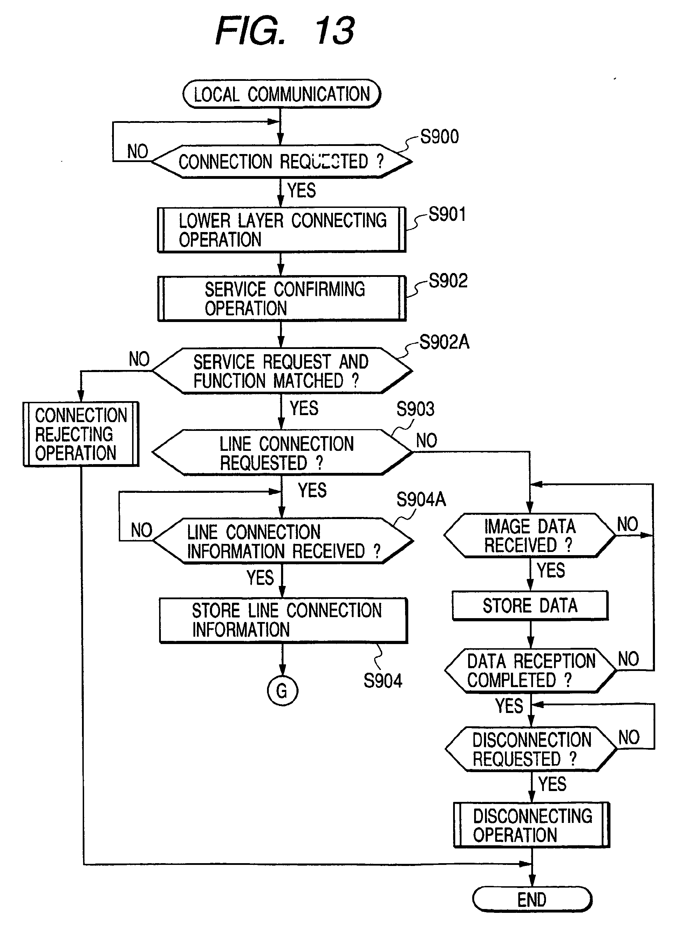

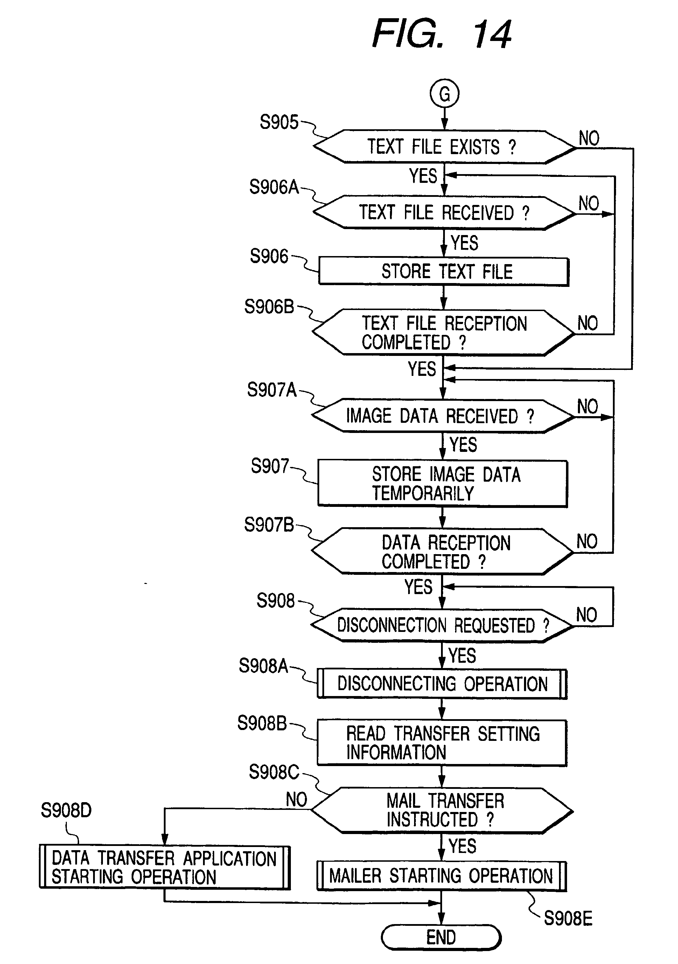

Fig. 13 and Fig. 14 are flowcharts showing the control of the local communication mode of the cellular phone 201 for executing the data transferring method according to the second example.

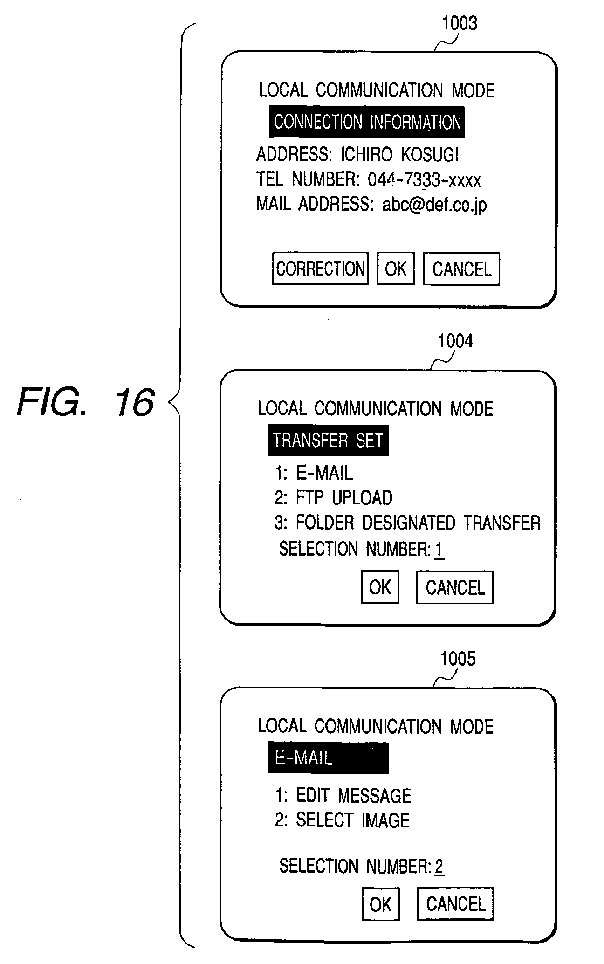

Fig. 16 is a view illustrating various screens displayed on the display part 102 during the local communication mode.

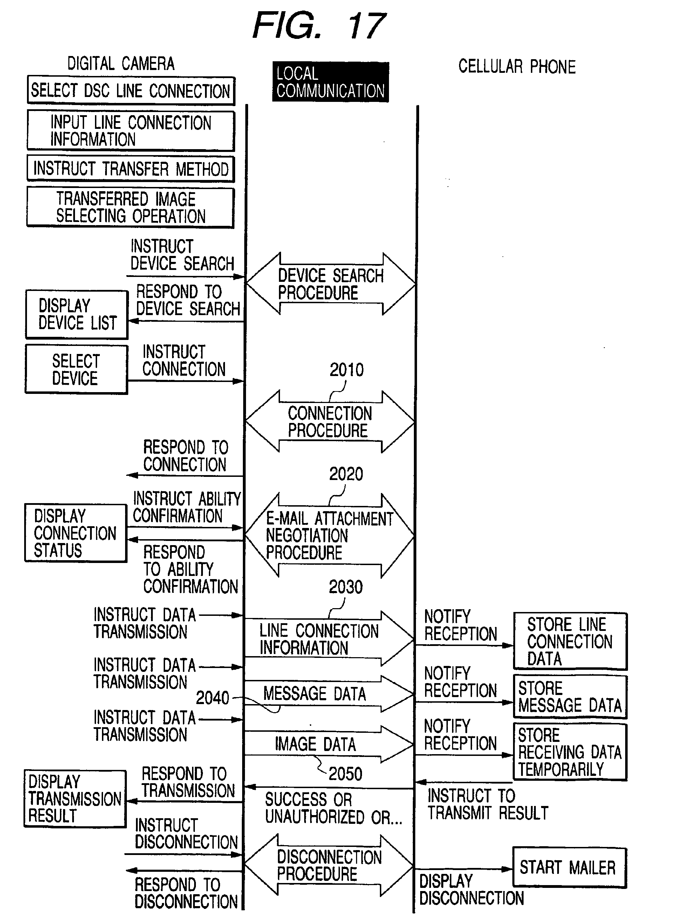

Fig. 17 is a sequence chart showing a local communication sequence between the digital camera 101 and the cellular phone 201.

Next, Fig. 12 is referred while the main processing of the local communication mode in the digital camera 101 is described. Incidentally, in the flowchart of Fig. 12, the steps except Step S807 and Step S808 are similar processes that correspond to those shown in Fig. 5 unless a particular description is made.

At first, when the mode changing switch 104 of the digital camera 101 is depressed, the digital camera 101 shifts to the local communication mode (Step S801).

Thereby, the list display menu screen 602 (see Fig. 10) of the functions usable in local communication is displayed on the display part 102 of the digital camera 101 (Step S805). When a user performs a key selection operation by operating the switches 103A, 103B and 103C (Step S806A) to select the line connection in the list display menu screen 602 (the result of a judgment at Step S806 is a yes), the digital camera 101 temporarily stores the selection information (or operation instruction information) concerning the selection of the line connection at a connection setting operation step (Step S807). And the digital camera 101 displays a connection information setting menu screen 1003 (see Fig. 16) displaying the information set at the last time on the display part 102. The information to be displayed on the connection information setting menu screen 1003 is stored in the memory 105M.

The connection information setting menu screen 1003 is a menu screen for the setting of the nickname of an address, a telephone number of a connection point of an Internet service provider or the like, and a mail address. The setting is performed by the use of the switches 103A, 103B and 103C. As for the information to be displayed on the connection information setting menu screen 1003, it may be possible to store a database such as a telephone directory including connection information to be managed on the basis of the nickname thereof in the memory 105M for selecting and displaying the data registered in the database.

When the connection setting operation has been completed, the digital camera 101 temporarily stores the connection information (such as mail addresses), and then displays a transfer setting menu screen 1004 on the display part 102 (Step S808). Incidentally, the transfer setting menu screen 1004 is a menu screen for the selection of a request of the processing of data such as a transferred image. When the item of FTP Upload (or the item concerning file transfer protocol (FTP) upload) is selected in the transfer setting menu screen 1004, the digital camera 101 displays an information setting screen for the setting of necessary information (such as the information concerning the assignment of a FTP server) on the display part 102 besides the connection information set at Step S807. Then, the user performs the confirmation of the setting and a change of the setting by means of the information setting screen.

When the user selects the item of E-Mail in the transfer setting menu screen 1004, the digital camera 101 temporarily stores the transfer setting information indicating that a piece of mail has been selected, and displays a mail setting menu screen 1005 on the display part 102. The user can edit messages on this menu screen 1005. When the user selected the item of Message Editing in the menu screen 1005, the digital camera 101 shifts to a mail editing menu screen based on text for editing using the switches 103A, 103B and 103C or the like. Then, the user edits the text of mail to store the edited text in the memory 105M as a text file. When the user selects the item of Image Selection in the menu screen 1005, the user can select an image to be attached by an image selecting operation (Step S809). It is also possible to transfer only the text mail without attached image data.

When a series of connection settings is completed, the digital camera 101 enters the processing shown in Fig. 6 like the first embodiment, and the digital camera 101 executes the device searching step (Step S413).

When the user has selected a connection device in the terminal search result display menu screen 607 and has instructed a connection request by operating a connection instruction operation (the result of a judgment at Step S414 is a yes), the digital camera 101 begins a local communication connection from a lower protocol to perform desired data communication like the described procedures of the first embodiment (Step S415).

Next, a communication sequence in the case where the item concerning mail transfer is selected in the transfer setting menu screen 1004 is described along Fig. 17.

When the user selected the image data transfer by means of e-mail with the digital camera 101, the digital camera 101 is connected with the cellular phone 201 in conformity with the lower protocol (2010) according to the aforesaid series of procedures, and then a service confirmation operation (2020) in conformity with a higher protocol is performed. In the confirmation operation 2020, when the item of line connection is selected at Step S806 and the item of e-mail is selected at Step S808, the digital camera 101 ascertains whether the cellular phone 201 supplies an e-mail service or not on the basis of the transfer setting information set at Step S808.

When the service supported by the cellular phone 201 is ascertained to agree with the requested service, first the digital camera 101 transfers line connection information (2030) (such as the e-mail address set at Step S807) to the cellular phone 201. Successively, when the text data of the e-mail is stored in the digital camera 101, the digital camera 101 transfers message data (text data) (2040). When the transferring of the text data (2040) is completed, an attached image data file (2050) is successively transferred.

Next, Fig. 13 and Fig. 14 are referred while the control of the local communication mode in the cellular phone 201 is described. Incidentally, in Fig. 13 and Fig. 14, the steps other than the steps from Step S904 to Step S906B and from Step S908C to Step S908E are similar to corresponding steps in Fig. 7 unless particular descriptions are made. Incidentally, Fig. 13 and Fig. 14 severally show a part of the program stored in the memory 352. The communication system control circuit 350 is a computer that reads the program from the memory 352 to operate in conformity with the program. The memory 352 is a storage medium storing the program in a state capable of being read by the communication system control circuit 350. Incidentally, the program may be received by the public communication circuit 326 or the local communication circuit 330 to be stored in the memory 352.

In the following, the operation of the cellular phone 201 executed under the control of the communication system control circuit 350 operating in conformity to the program shown in Fig. 13 and Fig. 14 is described.

The cellular phone 201 performs a connection operation (Step S901) in conformity with a lower protocol by executing the aforesaid series of operations on the basis of a connection request (Step S900) from the digital camera 101. After that, the cellular phone 201 executes a service confirmation operation (Step S902), and then a connection in conformity with a higher protocol is completed. At this time, the cellular phone 201 temporarily stores the information indicating the requested service in the buffer memory 320. The information is the transfer setting information set at Step S808 in Fig. 12.

When the service requested by the higher protocol agrees with a function of the cellular phone 201 (Step S902A), the cellular phone 201 receives the line connection information (such as an e-mail address) transferred from the digital camera 101 (Step S904A) in case of the local communication based on a line connection request from the digital camera 101 (Step S903). And then, the cellular phone 201 temporarily stores the connection information file of the transferred line connection information in the buffer memory 320 (Step S904).

Next, the cellular phone 201 advances to the processing shown in Fig. 14. When the cellular phone 201 judges that the transfer of a text file has been made (Step S905), the cellular phone 201 receives the text file (Step S906A), and temporarily stores the text file in the buffer memory 320 as the message file of the mail (Step S906).

When the transfer of an image file to be attached is successively performed (Step S907A) after the reception of the text file (Step S906), the cellular phone 201 temporarily stores the image data file in the buffer memory 320 (Step S907).

When the cellular phone 201 receives a disconnection requirement from the digital camera 101 after the reception of the data is completed and a series of communication ends (Step S908), the cellular phone 201 disconnects the connection of the local communication (Step S908A), and reads transfer setting information from the buffer memory 320 (Step S908B). The transfer setting information is the information that has been informed from the digital camera 101 as a result of the service confirming operation at Step S902 and has been stored in the buffer memory 320. Hereupon, the information is the information instructing the transfer of the data by e-mail and the information instructing the FTP upload of the data.

When the cellular phone 201 is instructed to transfer the data by e-mail in conformity with the higher protocol at Step S902 according to the transfer setting at Step S808 (Step S908C), the cellular phone 201 performs the automatic starting of a mail program at the time of the end of the local communication (Step S908E) like the first example. In the mail program starting operation at Step S908E, the cellular phone 201 secures a working area necessary for the buffer memory 320.

Incidentally, in the case where the FTP upload is instructed in conformity with the higher protocol at Step S902 according to the transfer setting at Step S808, the cellular phone 201 starts a data transferring application for the FTP upload (Step S908D). In the data transferring application starting operation at Step S908D, too, the cellular phone 201 secures a working area necessary for the buffer memory 320.

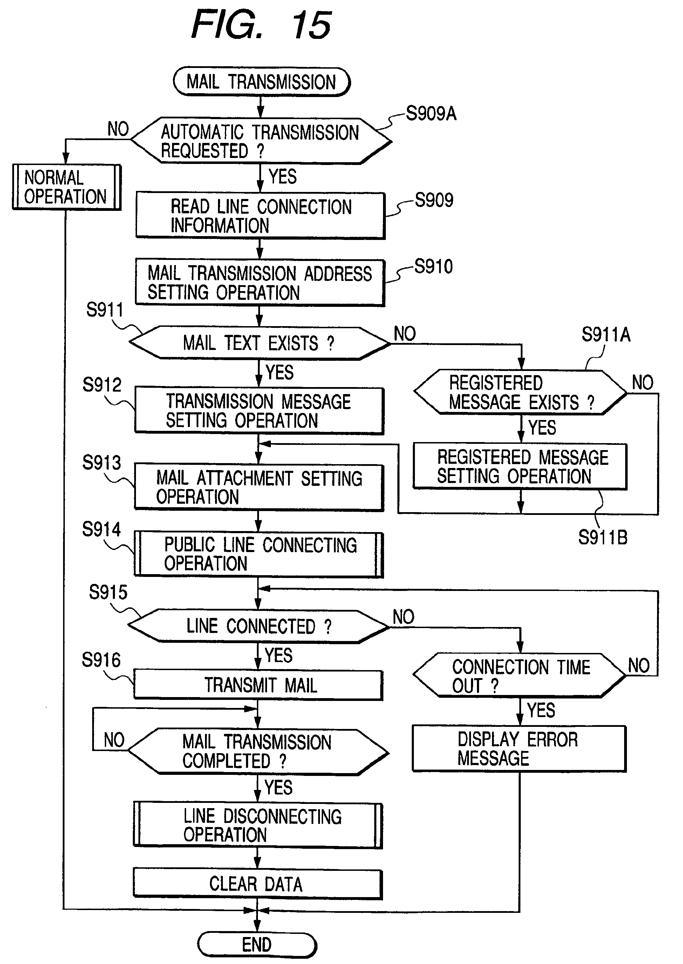

Next, Fig. 15 is referred while the mail transmission processing performed by the cellular phone 201 after the starting of the e-mail program is described. The processing is executed under the control of the communication system 350 based on the e-mail program.

Fig. 15 is a flowchart showing the e-mail program stored in the memory 352. The communication system program 350 is a computer that reads the program from the memory 352 to operate in conformity with the program. The memory 352 is a storage medium storing the program in a state capable of being read by the communication system control circuit 350.

When the local communication processing has been completed, the cellular phone 201 first ascertains whether the starting factor is a transmission request of mail attachment image data through the local communication or not at a judgment step of the existence of an automatic transmission request (Step S909A) in conformity with the mail transmission program that has started at Step S908E (see Fig 14) in the local communication mode of the cellular phone 201 after the completion of the local communication processing.

When the cellular phone 201 judged that the starting was made on the basis of the transmission request of mail attachment image data (the result of a judgment at Step S909A is a yes), the cellular phone 201 reads line connection information (such as an e-mail address) stored in the buffer memory 320 at Step S904 (Step S909). Next, at a mail transmission address setting step (Sep S910), the cellular phone 201 sets the e-mail address from the read line connection information as the transmission destination in the mailer.

Next, at a step for the judgment of the existence of a mail text (Step S911), the cellular phone 201 ascertains the existence of the message file stored at Step S906. When there is a text file including a message (the result of a judgment at Step S911 is a yes), the cellular phone 201 sets the text file as a mail message at a transmission message setting operation step (Step S912). Moreover, when there is a message registered in the memory 352 in advance (the result of a judgment at Step S911A is a yes) in the case where no message is stored at Step S906, the cellular phone 201 sets the registered message as a mail message (Step S911B).

After that, after the cellular phone 201 attached the image data stored in the buffer memory 320 at Step S907 to a piece of mail as an attachment file (Step S913), the cellular phone 201 executes a public line connection operation for connecting the cellular phone 201 with a mail server through the public radio base station 301 and the public line network 401 by means of the public communication circuit 326 (Step S914). After that, when the line with the mail server is connected (Step S915), the cellular phone 201 transmits the mail that has been processed at Steps S910, S912, S911B and S913 from the public communication circuit 326 to the mail server through the public line network 401 (Step S916), and then the cellular phone 201 ends the series of operations. The disconnection operation of the line after the completion of the mail transmission is the same as that described by reference to Fig. 8.

Incidentally, in another example, when connection information (such as the mail address of a transmission destination) of a line or the like is not transferred to the cellular phone 201 from the digital camera 101 in the local communication, the cellular phone 201 executes the transfer of image data on the basis of the information (such as a mail address) registered in the memory 352.

### (First Embodiment)

A data transferring method according to a first embodiment of the present invention is described next. Incidentally, because a system for realizing the data transferring method is composed of the digital camera 101, the cellular phone 201 and the public line network 401 like the system of the first example, descriptions concerning them are omitted.

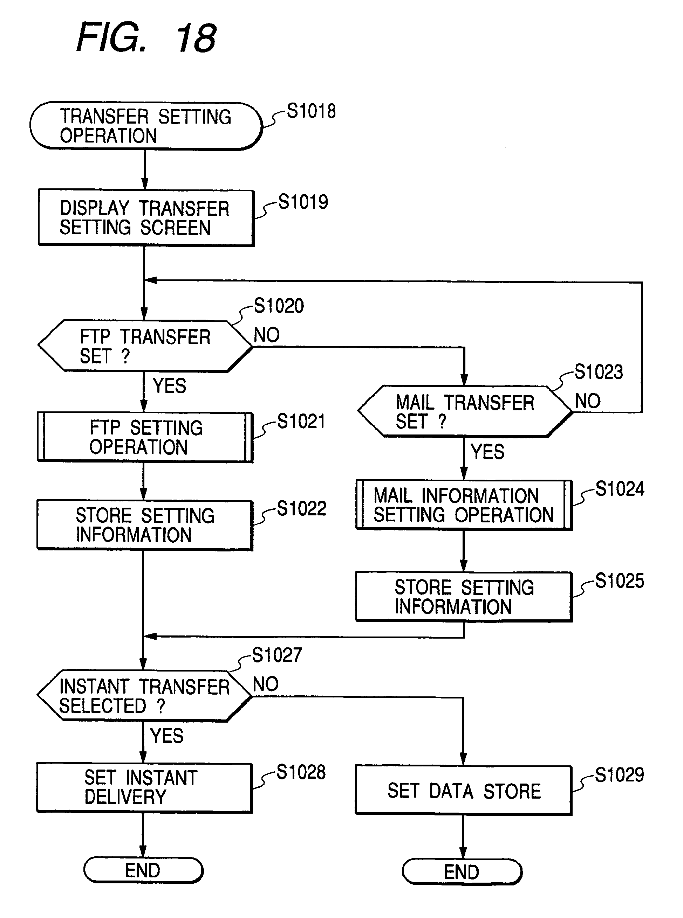

Fig. 18 is a flowchart showing a transfer setting selection operation in the control of the local communication mode.

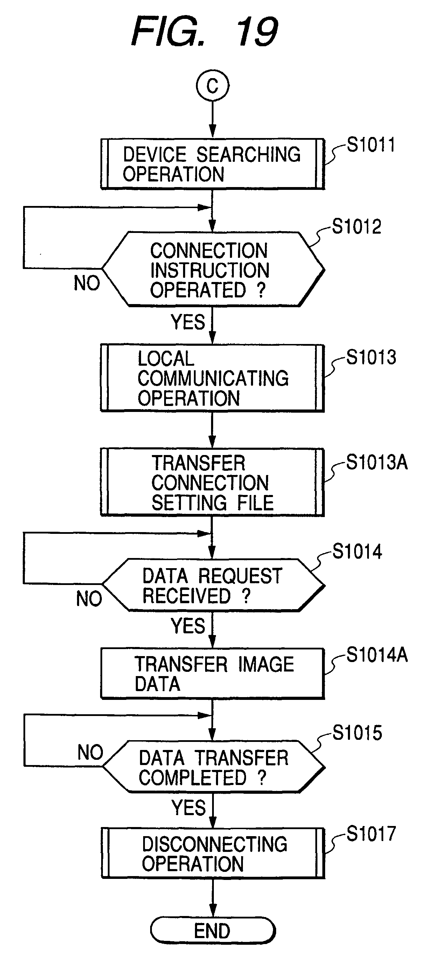

Fig. 19 is a flowchart showing the control of the local communication mode in the digital cameral 101 for executing the data transferring method according to the first embodiment.

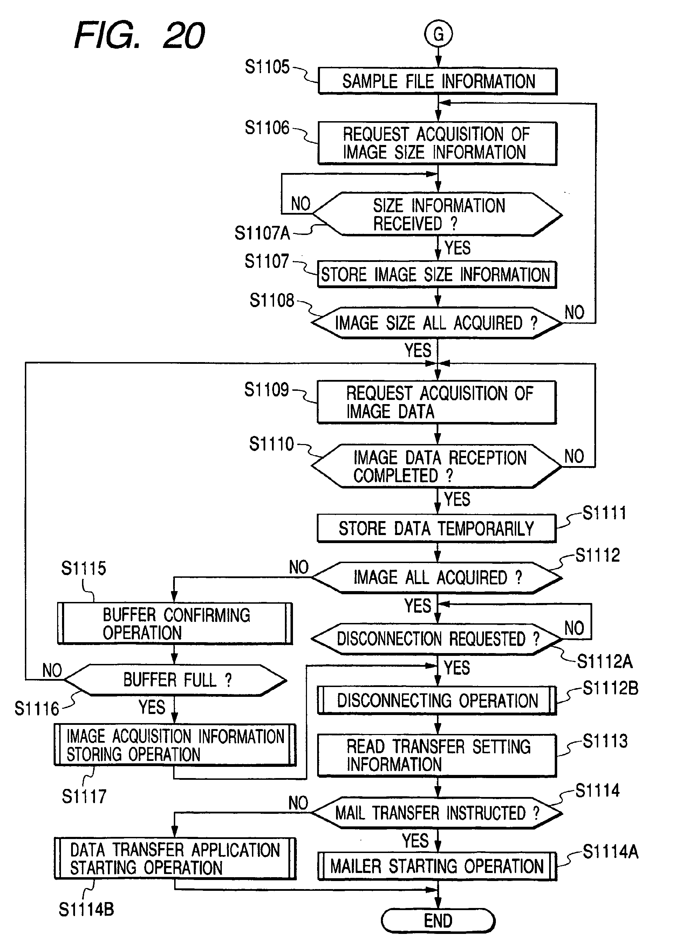

Fig. 20 is a flowchart showing the control of the local communication mode in the cellular phone 201 for executing the data transferring method according to the first embodiment.

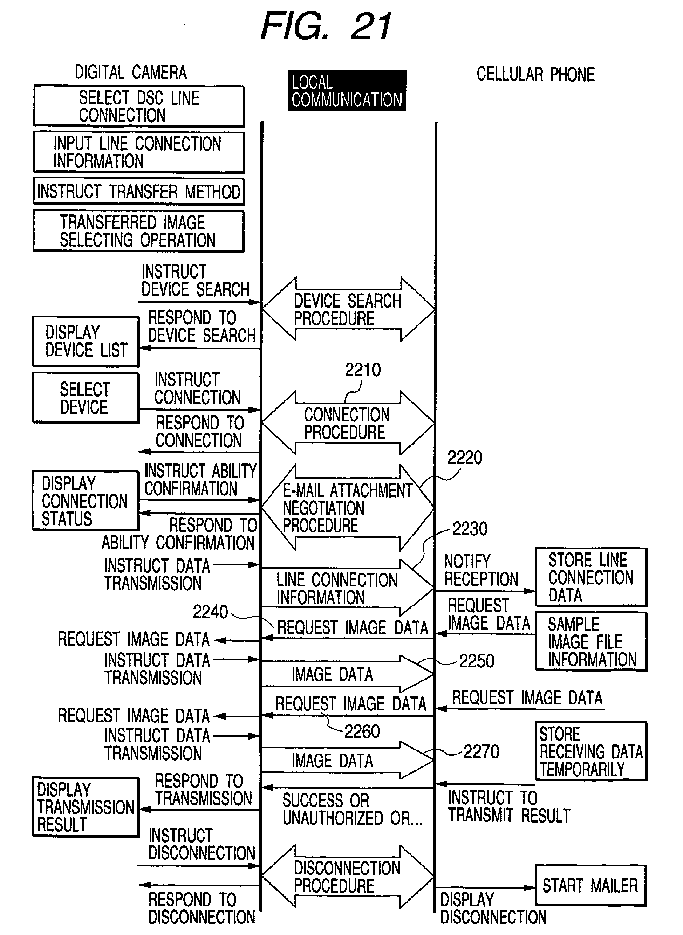

Fig. 21 is a sequence chart showing a local communication sequence between the digital camera 101 and the cellular phone 201 for executing the data transferring method according to the first embodiment.

The first embodiment has the following three added functions. One of them is a function by which a user can give instruction information concerning the selection of the transmission method of image data between a first method in which the cellular phone 201 immediately transmits the image data transferred from the digital camera 101 by local communication in addition to connection information concerning lines and the like to a public line and a second method in which the cellular phone 201, which is the transfer destination of the image data, temporarily stores the image data and transmits the image data after the user's operations such as the editing of a message by means of operations of the cellular phone 201. A second function is a function by which the user can obtain information concerning the size of selected image data and the like from the cellular phone 201, which has a public line connection function, on the basis of image selection information included in the connection information concerning lines and the like transmitted from the digital camera 101 through the local communication. A third function is a function making the cellular phone 201 obtain image data from the digital camera 101 according to the situation of the cellular phone 201 such as the free space situation of the buffer memory 320 of the cellular phone 201 by means of the obtained image information.

By the addition of those functions, the first embodiment makes it possible to select transfer timing of image data to a public line by means of the digital camera 101. Moreover, according to the first embodiment, the cellular phone 201 can transfer image data at an arbitrary timing according to the situation of the cellular phone 201 in a transfer operation of the image data assigned by the digital camera 101.

Next, the main processing in the local communication mode in the digital camera 101 is described.

When the mode changing switch 104 of the digital camera 101 is depressed, the digital camera 101 shifts to the local communication mode (Step S801) (see Fig. 12). Thereby, the list display menu screen 602 (see Fig. 10) of the functions usable in local communication is displayed on the display part 102 of the digital camera 101 (Step S805).

When a user performs a key selection operation (Step S806A) to select the line connection in the list display menu screen 602 (the result of a judgment at Step S806 is a yes), the digital camera 101 displays a connection information setting menu screen 1003 (see Fig. 16) displaying the information set at the last time on the display part 102 by a connection setting operation (Step S807). The connection information setting menu screen 1003 is a menu screen for the performance of the setting of the nickname of an address, a telephone number of a connection point of an Internet service provider or the like, and a mail address by means of the switches 109.

Although the information displayed on the connection information setting menu screen 1003 is described to be the last set information, it is also possible to display registered data selectively by means of a database such as a telephone directory including connection information to be managed on the basis of the nickname thereof.

When the connection setting operation has been completed (Step S807), the digital camera 101 stores the set connection information in the memory 105M, and then the digital camera 101 shifts to the transfer setting operation step (Step S808).

Incidentally, because the transfer setting operation is shown in the flowchart of Fig. 18, hereupon the transfer setting operation is described in conformity with Fig. 18.

At first, when the digital camera 101 shifts to the transfer setting operation (Step S1018), the digital camera 101 advances to a transfer setting menu screen display step (Step S1019) to display the transfer setting menu screen 1004 (see Fig. 16) on the display part 102. The transfer setting menu screen 1004 is a menu screen for the selection of a request of the processing of data such as a transferred image.

Each submenu screen to be displayed after the user selected a transfer method in the transfer setting menu screen 1004 is not shown. But, when the item of the FTP Upload is selected in the transfer setting menu screen 1004 (the result of a judgment at Step S1020 is a yes), the digital camera 101 shifts to a FTP setting operation at Step S1021. Then, the digital camera 101 displays the information setting screen for the setting of necessary information (such as the information concerning the assignment of a FTP server) on the display part 102 besides the connection information set at Step S807. And then, the user performs the confirmation of the setting and a change of the setting in the information setting screen. When the setting is completed, the digital camera 101 advances to Step S1022 to store the transfer setting information into the memory 105M.

Incidentally, the submenu for the setting of transfer is described in the present embodiment, but the aforesaid necessary information can be set on the connection information setting menu screen 1003, or in another page.

Moreover, when the user selects the item of E-Mail in the transfer setting menu screen 1004 (the result of a judgment at Step S1023 is a yes), the digital camera 101 advances to Step S1024. At Step S1024, the user edits a message as the need arises. When the setting operation in an e-mail setting menu is completed, the digital camera 101 advances to Step S1025. At Step S1025, the digital camera 101 stores the information such as the message into the memory 105M, and stores the text of the mail as a made text file. The processing from Step S801 to this processing is common to the processing of the second example.

Next, the digital camera 101 shifts to a selection step (Step S1027). At Step S1027, the user performs the selection of the transmission method of data transferred from the digital camera 101 to the cellular phone 201 between the method in which the cellular phone 201 immediately transmits the data to a public line and the method in which the cellular phone 201 stores and holds the data such as the connection information and the appointed image file. When the user selected the instant transfer by a selection operation by means of the switches 109 (the result of a judgment at Step S1027 is a yes), the digital camera 101 advances Step S1028. At Step S1028, the user adds information for the request of instant distribution to the cellular phone 201 into the memory 105M to store the information in the memory 105M as a finally set file.

Moreover, when the user wants to store the data in the cellular phone 201, the user inputs the intention into the digital camera 101 with the switches 109 (the result of a judgment at Step S1027 is a no), and the digital camera 101 shifts to Step S1029. At Step S1029, the user adds data storing instruction request information to the set file like the above and the digital camera 101 stores the information as a finally set file. Then a series of transfer setting operations is terminated. After that, the digital camera 101 shifts to Step S809 in Fig. 12.

At the image selecting operation step (Step S809), the user selects an image to be transferred like the first example. When the image selecting operation is completed, the digital camera 101 advances to a device searching operation step (Step S1011) (see Fig. 19). Incidentally, when there is no registered image, only the text mail without any attached image data is transferred.

When the user has selected a device to be connected in the terminal search result display menu screen 607, which is displayed on the display part 102 in the device searching operation at Step S1011, by operating the switches 109 and then the user has instructed a connection requirement (the result of a judgment at Step S1012 is a yes), the digital camera 101 begins a local communication connection in conformity with a lower protocol by means of the communication circuit 103 at a local communicating operation step (Step S1013) similarly to the described procedures in the first example. In the local communication connection, the digital camera 101 ascertains whether or not the cellular phone 201 has the services (or the mail transfer service and the FTP transfer service) set at Step S808 by the communication in conformity with a higher protocol.

When the local communication connection with the cellular phone 201 is completed, the digital camera 101 first transfers the line connection information set at the line connection setting operation, the transfer setting operation and image selecting operation at Steps S807, S808 and S809 (Step S1013), and waits a data acquisition request from the cellular phone 201 (Step S1014).

Hereupon, when the digital camera 101 receives a data acquisition request assigning a file of the image data and the like included in the connection setting file transferred from the cellular phone 201 in advance (the result of a judgment at Step S1014 is a yes), the digital camera 101 reads the data of one image data file from the memory card 120 in conformity with the request signal, and transfers the read data in a lump or in lots from the communication circuit 103 to the cellular phone 201.

Hereupon, in the case where a plurality of image data files are assigned in the line connection information, the digital camera 101 repeats the aforesaid procedures until the buffer memory 320 of the cellular phone 201 becomes full or until the cellular phone 201 has acquired all of the assigned image data file.

Incidentally, not only the image file, but also the text data such as the message described above, voice data files related to images, and the like can be transferred by similar procedures.

When the data transfer is completed (the result of a judgment at Step S1015 is a yes), the digital camera 101 advances to Step S1017. At Step S1017, the digital camera 101 executes the disconnecting operation of the local communication, and then the digital camera 101 terminates the local communication mode.

Next, the communication sequence in the case where the user selected the mail transfer in the transfer setting menu screen 1004 is described along Fig. 21.

When the user selected the image data transfer by means of e-mail with the digital camera 101, the digital camera 101 is connected with the cellular phone 201 in conformity with a lower protocol (2210) according to the aforesaid series of procedures, and then a service confirmation operation in conformity with a higher protocol is performed (2220). In the confirmation operation (2220), the digital camera 101 ascertains whether the cellular phone 201 has the services (the e-mail transfer service and the FTP transfer service) set at Step S1008 or not by the communication in conformity with the higher protocol.

When the services supported by the cellular phone 201 are ascertained to agree with the requested services, the digital camera 101 transfers line connection information including a transmission destination e-mail address, the transfer image information and the like to the cellular phone 201 (2230).

When the cellular phone 201 receives the line connection information, the cellular phone 201 first stores the line connection information. After that, the cellular phone 201 extracts the image file name assigned and selected by the digital camera 101, and the cellular phone 201 sequentially transmits a data acquisition request of the selected image file to the digital camera 101 (2240).

Having received the data acquisition request (2240), the digital camera 101 transmits the designated image data file in lots or in a lump to the cellular phone 201 in conformity with the acquisition request (2250). The digital camera 101 repeats the operation until the buffer memory 320 of the cellular phone 201 becomes full or until the digital camera 101 has transferred all of the designated image data file like mentioned above (2260, 2270).

The sequence chart shows an example in which one image datum is divided into two parts and they are continuously transferred at two times. But, in the case where the file size of an image data file is large, the image data file is divided into plural parts more than two to be transferred at a plurality of times. Moreover, when the designated image data file has a size small enough to be transmitted at a time, one image data file is transferred in response to one image transfer request.

Moreover, because the transfer of an image data file is executed in conformity with an instruction of the cellular phone 201, it is possible to request image data continuously or to discontinue transfer temporarily according to the state of the cellular phone 201.

Incidentally, the acquisition procedures of the information concerning the size of an image file and the like and the transfer procedures of related data such as a text file and the like are omitted in the sequence chart of Fig. 21. But, the cellular phone 201 acquires image data size information necessary for executing data transfer control according to the free space situation of the buffer memory 320 in the case where the buffer memory 320 has not so large capacity or in the case where the digital camera 101 assigned a plurality of image data, for example.

Moreover, related data such as text data, a voice data file and the like can also be acquired in conformity with similar procedures to those for the image data.

Next, Fig. 13 and Fig. 20 are referred while the control of the local communication mode in the cellular phone 201 is described. Incidentally, Fig. 13 and Fig. 20 severally show a part of the program stored in the memory 352. The communication system control circuit 350 is a computer that reads the program from the memory 352 to operate in conformity with the program. The memory 352 is a storage medium storing the program in a state capable of being read by the communication system control circuit 350. Incidentally, the program may be received by the public communication circuit 326 or the local communication circuit 330 to be stored in the memory 352.

In the following, the operation of the cellular phone 201 executed under the control of the communication system control circuit 350 operating in conformity to the program shown in Fig. 13 and Fig. 20 is described. Incidentally, the processing shown in Fig. 13 in the present embodiment is common to that of the second example.

When the cellular phone 201 has received a connection request from the digital camera 101 with the local communication circuit 330 (Step S900), the cellular phone 201 performs a connection operation in conformity with a lower protocol at a lower layer connection operation step (Step S901) with the local communication circuit 330 by executing the aforesaid series of operations. After that, the cellular phone 201 executes a connection in conformity with a higher protocol at a service confirmation operation step (Step S902).

At the service confirmation operation step (Sep S901), the cellular phone 201 receives the transfer setting information from the digital camera 101 with the local communication circuit 330, and stores the transfer setting information from the digital camera 101 in the buffer memory 320. The transfer setting information indicates the services (the mail transfer information and the FTP transfer information) requested by the digital camera 101.

When the services requested in the higher protocol connection agree with the functions of the cellular phone 201 (the result of a judgment at Step S902A is a yes), and when the cellular phone 201 judged that the requested services were maid by the local communication caused by a line connection request from the digital camera 101 (the result of a judgment at Step S903 is a yes), the cellular phone 201 waits the transfer of the line connection information from the digital camera 101 (2230) (Step S904A).

When the line connection information is received by the local communication circuit 330 (2230) (the result of a judgment at Step S904A is a yes), the cellular phone 201 temporarily stores the connection information file of the line connection information into the buffer memory 320 at the line connection information storing step (Step S904). Then, the cellular phone 201 advances to Step S1105 (see Fig. 20). At Step S1105, the cellular phone 201 extracts the file name of the image data file designated to be transferred by the digital camera 101 from the line connection information. Then, at Step S1106, the cellular phone 201 transmits an acquisition request of the information of the image size, the image file size and the like concerning assigned image data file from the local communication circuit 330 to the digital camera 101.

When the image size information is received by the local communication circuit 330 (the result of a judgment at Step S1107A is a yes), the cellular phone 201 advances to Step S1107. At Step S1107, the cellular phone 201 stores the acquired image size information into the buffer memory 320. When the storing of the image size information is completed, the cellular phone 201 judges whether the whole image size information to all of the image data files assigned by the image file information included in the line connection information is acquired or not at Step S1108. When the cellular phone 201 judges that it has acquired the whole image size information (the result of a judgment at Step S1108 is a yes), the cellular phone 201 advances to Step S1109. At Step S1109, the cellular phone 201 transmits an acquisition request of the image file data assigned by the line connection information to the digital camera 101.

When the cellular phone 201 judges that it has not acquired the whole of the image size information to all of the assigned image files at Step S1108 (the result of a judgment at Step S1108 is a no), the cellular phone 201 shifts to the image size information acquisition request transmission step (Step S1106), and executes the acquisition of the information. The series of the operations is performed until the cellular phone 201 has completed the acquisition of the whole information of all the assigned image data files.

When the cellular phone 201 has completed the acquisition of the whole image size information of all the assigned image data files (the result of a judgment at Step S1108 is a yes), the cellular phone 201 advances to the image data acquisition request step (Step S1109). At Step S1109, the cellular phone 201 selects one image data file among the assigned images and transmits an image data acquisition request to the digital camera 101 from the local communication circuit 330. After the transmission of the acquisition request of the imaged data, the cellular phone 201 shifts to Step S1110. At Step S1110, the cellular phone 201 judges whether the reception of the assigned image data file has been completed or not. When the assigned image data file is received by the local communication circuit 330 (the result of a judgment at Step S1110 is a yes), the cellular phone 201 stores the acquired image data file into the buffer memory 320 at Step S1111.

When the cellular phone 201 completed the storage of the data, the cellular phone 201 next judges whether it has acquired all the assigned image data files or not (Step S1112). When the cellular phone 201 has acquired all the assigned image data files (the result of a judgment at Step S1112 is a yes), the cellular phone 201 waits the reception of a disconnection request of the local communication (Step S1112A). When the disconnection request of the local communication is received by the local communication circuit 330 (the result of a judgment at Sep S1112A is a yes), the local communication circuit 330 executes the disconnection operation of the local communication (Step S1112B). Next, at Step S1113, the cellular phone 201 reads the transfer setting information stored at the service confirmation operation at Step S1102, and judges whether the transfer of mail is requested or not (Step S1114).

When the transfer of the mail is selected here (the result of a judgment at Step S1114 is a yes), the cellular phone 201 starts a mailer stored in the memory 352, and secures a working area necessary for the buffer memory 320 (Step S1114A). When the mail transfer is not selected (the result of a judgment at Step S1114 is a no), the cellular phone 201 starts an application for executing data transfer in conformity with the FTP or the like from the memory 352, and the cellular phone 201 secures a working area necessary for the buffer memory 320 (Step S1114B). Then the cellular phone 201 ends the local communication operation.

Moreover, when the cellular phone 201 judges that the acquisition of all the designated image data files is not completed at the judgment step of the number of acquired image data files (Step S1112), the cellular phone 201 advances to Step S1115. At Step S1115, the cellular phone 201 compares the free space of its buffer memory 320 with the size of the image data file to be acquired at the next time. Thus, the cellular phone 201 performs the judgment whether the image file is smaller than the buffer size or not at Step S1116.

When the cellular phone 201 judges that the size of the image data file is smaller than the buffer size (the result of a judgment at Step S1116 is a no), the cellular phone 201 again shifts to Step S1109 to execute the acquisition operation of the next image data file. The operation is repeated until the cellular phone 201 has acquired all of the image data files the file names of which are included in the line connection information or until the buffer memory 320 becomes full.

When the cellular phone 201 judges that the buffer memory 320 has become full at the buffer size judgment step (Step S1116) (the result of a judgment at Step S1116 is a yes), the cellular phone 201 shifts to Step S1117. At Step S1117, the cellular phone 201 stores the information of image data files that has already been acquired and the names of image data files that are not acquired yet into the memory 352. After that, the cellular phone 201 shifts to the disconnection operation of the local communication (Step S1112B). When the series of communication has been completed, the cellular phone 201 advances to Step S1114. And then, the cellular phone 201 performs the automatic starting of mail (Step S1114A) or the automatic starting of a data transfer application (Step S1114B) at the end of the local communication.

Although only the acquisition operations of the image files are described in the present embodiment, when the information such as the name of a text data file, a voice file related to the image data file or the like is included in the line connection information received at Step S1103, the cellular phone 201 transmits a data acquisition request by an acquisition procedure similar to the aforesaid acquisition procedure of the image data file, and data transfer is performed.

Moreover, when the information of the data file related to the image data file is not described in the line connection information, but when the information of the data file related to the information of the image size and the like is described in the line connection information, it is possible that the cellular phone 201 acquires the related data from the described information.

Next, Fig. 15 is referred while the mail transmission that the cellular phone 201 performs after an e-mail program has been started is described. The processing is performed under the control of the communication system control circuit 350 on the basis of the e-mail program.

When the cellular phone 201 received an automatic transmission request through local communication (the result of a judgment at Step S909A is a yes), the cellular phone 201 first reads the line connection information stored in the buffer memory 320 at Step S1104 previously after the local communication has ended (Step S909). Next, at the mail transmission address setting operation step (Step S910), the cellular phone 201 sets an e-mail address in the mailer from the read line connection information.

Next, at the step for the judgment of the existence of a mail text (Step S911), the cellular phone 201 ascertains the existence of a message file to be transferred. When there is a text file including a message (the result of a judgment at Step S911 is a yes), the cellular phone 201 sets the text file as a mail message at the transmission message setting operation step (Step S912). Next, after the cellular phone 201 has set the image data to be attached (Step S913), the cellular phone 201 judges whether the line connection information instructs the instant transmission of mail or not before the cellular phone 201 executes a public line connection operation (Step S914).

When the line connection information instructs the instant transmission, the cellular phone 201 advances to Step S914 like the second example. And the cellular phone 201 performs the line connection with the public communication circuit 326 (the result of a judgment at Step S915 is a yes), and then the cellular phone 201 transmits mail (Step S916) and ends the series of the operations.

On the other hand, when the line connection information instructs data storing, the cellular phone 201 does not advance to Step S914, and ends the automatic transmission operation of mail in a state such that the mailer has been started.

Incidentally, although the present embodiment is described to have image data to be attached always, it is possible not to assign any image file to be attached in the image selection operation at Step S1009. When only a text file received without any attached image file, it is possible to transmit only the text file.

Moreover, although the information set in the connection information setting menu screen 1003 at Step S807 and the image information set in the transfer image selection menu screen 1006 at Step S809 are severally stored as a file, these information files may commonly be used by files produced in conformity with a digital print order format (DPOF) or the like.

Moreover, it is also possible to use the line connection information, which is described in the above examples and the embodiment and includes the assignment information of an image data file, the file assignment information of a text file, a voice file and the like, the transfer setting information such as a mail address, FTP connection information, an instant transmission instruction and the like, with a DPOF file. When the line connection information is commonly used with the DPOF file, the line connection information to be transferred from the digital camera 101 at Step S1013A corresponds to the DPOF file in the third embodiment. The cellular phone 201 receives the DPOF file at Step S904A, and stores it in the buffer memory 320 at Step S904.

### (Third Example)

In the embodiment, a configuration for transferring all of one data file at a time in an acquisition method of an image data file has been described.

In a third example, the file information of image data to be transferred is transferred from the digital camera 101 being an image input/output apparatus to the cellular phone 201 being a line communication apparatus, and the digital camera 101 reads a quantity of the transferred image data that can be stored in the buffer memory 320 from the cellular phone 201.

That is, in the third example, when image data file larger than the storage capacity of the buffer memory 320 of the cellular phone 201 is assigned, a part of the image data file is transferred to the buffer memory 320. Then, the public communication circuit 326 connects a line. And, after the part of the image data has been transferred to a server, the other part of the image data is sequentially transmitted while the local communication and the line connection are simultaneously made.

Consequently, in the present example, when the cellular phone 201 receives a transmission request of mail attachment image data, the cellular phone 201 receives data until the buffer memory 320 becomes full from the digital camera 101. At the point of time, the cellular phone 201 starts a mailer to begin mail transmission with the mailer. Moreover, when there are remaining attached file data, the cellular phone 201 sequentially reads the data from the digital camera 101 according to the free space of the buffer memory 320 while transferring the data stored in the buffer memory 320 to the public line.

That is, in the present example, when the cellular phone 201 confirms the state of the buffer memory 320 being full at Step S1116, the cellular phone 201 starts the mail program (or a FTP data transferring application) while keeping the local communication connection, and the cellular phone 201 advances to the processing shown in Fig. 15. Then, the cellular phone 201 executes a line connection with the public communication circuit 326 to transmit an image to a server. And, when the buffer memory 320 has a free space, the cellular phone returns to Step S1109, and acquires an assigned image data file from the digital camera 101.

In another example, the digital camera 101 temporarily disconnects the local communication with the cellular phone 201 after the digital camera 101 has transmitted a DPOF file including assignment information (file name) of image data. On the other hand, when the cellular phone 201 receives the DPOF file including the assignment information of the image data with the local communication circuit 330, the cellular phone 201 stores the received DPOF file in the buffer memory 320, and disconnects the local communication with the digital camera 101 in response to the request from the digital camera 101.

And then, the cellular phone 201 again connects the local communication with the digital camera 101 with the local communication circuit 330, and requests image data to the digital camera 101 by the use of the image data assignment information included in the DPOF file stored in the buffer memory 320. Then, the cellular phone 201 receives the image data from the digital camera 101, and stores the received data in the buffer memory 320. In a further example, the processing of the request of the image data and the transfer of the image data is repeated at a plurality of times by dividing the image data into a plurality of parts as shown in Fig. 21.

Incidentally, in a still further example, when the cellular phone 201 receives a DPOF file from the digital camera 101 through a local channel, the cellular phone 201 newly connects a local channel with the digital camera 101 with the former local channel being connected. Then, the cellular phone 201 requests image data to the digital camera 101 through the newly connected local channel.

When the cellular phone 201 has completed the reception and the storing of the image data from the digital camera 101, the cellular phone 201 starts an e-mail program to transmit a piece of e-mail to which an image stored in the buffer memory 320 is attached to a predetermined destination from the public communication circuit 326.

In a still further example, the cellular phone 201 starts an e-mail program after receiving a DPOF file from the digital camera 101 or during receiving image data from the digital camera 101. In the embodiment, the cellular phone 201 simultaneously performs the reception of the transfer of image data from the digital camera 101 and the transfer of e-mail from the public communication circuit 326.

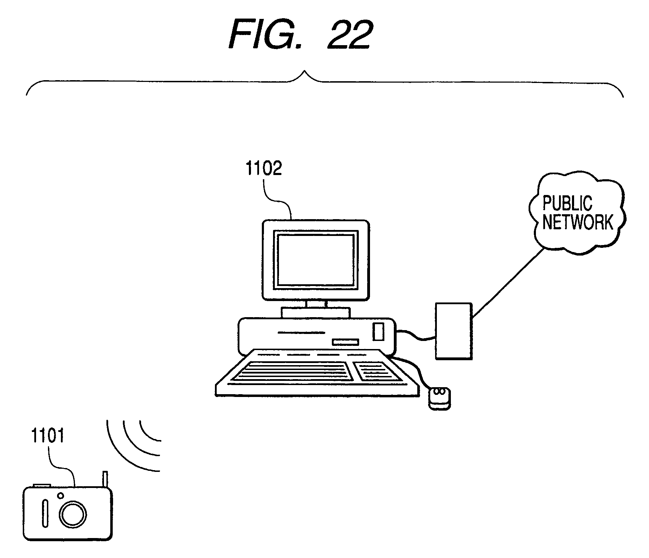

In the above description, a cellular phone 201 is exemplified as a radio communication apparatus. But, as shown in Fig. 22, a PC 1102 connected with a public line network through a modem or a PC connected with a local area network can also be used as the radio communication apparatus. Namely, the scope of the present invention is not limited to the embodiment described above, and various modifications can be performed within the scope of claims. In Fig. 22, the PC 1102 is a radio communication apparatus for communicating with a digital camera 1101 in radio.

Moreover, because many PC's are equipped with a large capacity recording medium such as a hard disc, it is also possible to take a configuration in which image data transferred from an image input/output apparatus on the basis of a line connection request are not stored temporarily but stored in the recording medium such as the hard disc.

## Claims

1. A radio communication apparatus (201) comprising:
local radio communication means (330) for receiving data by local radio communication; and
public network connection means (326) for connecting to a public network (401);
**characterised in that:**
said local radio communication means (330) is further arranged to receive instructions as to an instant delivery of the data, and
the apparatus includes control means for starting a mail program for transferring the data received by said local radio communication means to the public network in an operation of automatically transferring mails such that said control means causes the mail program to transfer the data where the instant delivery is instructed, and terminates the operation of automatically transferring mails where the instant delivery is not instructed.

2. A radio communication apparatus according to claim 1, wherein said local radio communication means is further arranged to receive an email address by the local radio communication, and said control means is arranged to cause the mail program to set the email address received by said local radio communication.

3. A local radio communication apparatus according to claim 1, wherein said local radio communication means is further arranged to receive information for designating the mail program, by the local radio communication, and said control means is adapted to start the mail program designated by the information.

4. A radio communication apparatus according to claim 1, wherein said control means is adapted to cause the mail program to transfer a mail to which the data received by the local radio communication is attached in a case where the instant delivery is instructed.

5. A radio communication method for a radio communication apparatus, comprising the steps of:
receiving data via local radio communication;
the method being **characterised by** the steps of:
receiving instructions (S904A) as to an instant delivery of the data, via local radio communication;
starting a mail program (S1114A) for transferring the data received by said local radio communication means via a public network in an operation of automatically transferring mails;
in a case where the instant delivery is instructed, transferring the data (S916) received by the local radio communication; and
in a case where the instant delivery is not instructed, terminating the operation of automatically transferring mails.

6. A radio communication method according to claim 5, further comprising the steps of:
receiving an email address, by the local radio communication; and
setting the email address set by said local radio communication.

7. A radio communication method according to claim 5, further comprising the steps of:
receiving information for designating the mail program, by the local radio communication and
starting the mail program designated by the received information.

8. A radio communication method according to claim 5, wherein said transferring step transfers a mail to which the data received by the local radio communication is attached in a case where the instant delivery is instructed.

## Patentansprüche

1. Funkkommunikationsvorrichtung (201) umfassend:
eine Lokalfunkkommunikationseinrichtung (330) zum Empfangen von Daten durch Lokalfunkkommunikation; und
eine Öffentlichesnetzverbindungseinrichtung (326) zur Verbindung mit einem öffentlichen Netz (401);
**dadurch gekennzeichnet, dass:**
die Lokalfunkkommunikationseinrichtung (330) weiterhin dazu ausgebildet ist, Anweisungen bezüglich einer augenblicklichen Datenlieferung zu empfangen, und
die Vorrichtung beinhaltet eine Steuereinrichtung zum Starten eines Mail-Programms zwecks Übertragung der durch die Lokalfunkkommunikationseinrichtung empfangenen Daten zu dem öffentlichen Netz im Rahmen eines Vorgangs zum automatischen Übertragen von Mails derart, dass die Steuereinrichtung das Mail-Programm veranlasst, die Daten zu übertragen, wenn die augenblickliche Lieferung angewiesen wird, und den Vorgang zum automatischen Übertragen von Mails beendet, wenn die augenblickliche Lieferung nicht angewiesen wird.

2. Funkkommunikationsvorrichtung nach Anspruch 1, bei der
die Lokalfunkkommunikationseinrichtung weiterhin dazu ausgebildet ist, eine E-Mail-Adresse durch die Lokalfunkkommunikation zu empfangen, und die Steuereinrichtung dazu ausgebildet ist, das Mail-Programm zu veranlassen, die durch die Lokalfunkkommunikation empfangene E-Mail-Adresse einzustellen.

3. Funkkommunikationsvorrichtung nach Anspruch 1, bei der
die Lokalfunkkommunikationseinrichtung weiterhin dazu ausgebildet ist, durch die Lokalfunkkommunikation Information zum Designieren des Mail-Programms zu empfangen, und die Steuereinrichtung angepasst ist, das durch die Information designierte Mail-Programm zu starten.

4. Funkkommunikationsvorrichtung nach Anspruch 1, bei der
die Steuereinrichtung angepasst ist, das Mail-Programm zu veranlassen, eine Mail zu übertragen, welcher die durch die Lokalfunkkommunikation empfangenen Daten angefügt sind, falls die augenblickliche Lieferung angewiesen wird.

5. Funkkommunikationsverfahren für eine Funkkommunikationsvorrichtung, umfassend die Schritte:
Empfangen von Daten über eine Lokalfunkkommunikation;
**gekennzeichnet durch** die Schritte:
Empfangen von Anweisungen (S904A) bezüglich einer augenblicklichen Datenlieferung über Lokalfunkkommunikation;
Starten eines Mail-Programms (S1114A) zwecks Übertragung der **durch** die Lokalfunkkommunikationseinrichtung empfangenen Daten über ein öffentliches Netz im Rahmen eines Vorgangs zum automatischen Übertragen von Mails;
falls die augenblickliche Lieferung angewiesen wird, Übertragen der durch die Lokalfunkkommunikationseinrichtung empfangenen Daten (S916); und
falls die augenblickliche Lieferung nicht angewiesen wird, Beendigen des Vorgangs zum automatischen Übertragen von Mails.

6. Funkkommunikationsverfahren nach Anspruch 5, weiterhin umfassend die Schritte:
Empfangen einer E-Mail-Adresse durch die Lokalfunkkommunikationseinrichtung; und
Einstellen der E-Mail-Adresse, die durch die Lokalfunkkommunikationseinrichtung eingestellt wurde.

7. Funkkommunikationsverfahren nach Anspruch 5, weiterhin umfassend die Schritte:
Empfangen von Information zum Designieren des Mail-Programms durch die Lokalfunkkommunikationseinrichtung, und
Starten des durch die empfangene Information designierten Mail-Programms.

8. Funkkommunikationsverfahren nach Anspruch 5, bei dem
der Übertragungsschritt eine Mail, welcher die durch die Lokalfunkkommunikationseinrichtung empfangenen Daten angefügt sind, überträgt falls die augenblickliche Lieferung angewiesen wird.

## Revendications

1. Appareil (201) de communication par radio comprenant :
un moyen (330) de communication locale par radio destiné à recevoir des données par communication locale par radio ; et
un moyen (326) de connexion à un réseau public pour connexion à un réseau public (401) ;
**caractérisé :**
**en ce que** ledit moyen (330) de communication locale par radio est en outre agencé pour recevoir des instructions en ce qui concerne un instant de délivrance des données ; et
**en ce que** l'appareil inclut un moyen de commande destiné à démarrer un programme de courrier pour transférer les données reçues par ledit moyen de communication locale par radio au réseau public dans une opération de transfert automatique de courriers de sorte que ledit moyen de commande fait que le programme de courrier transfère les données dans lesquelles l'instant de délivrance est imposé, et met fin à l'opération de transfert automatique des courriers lorsque l'instant de délivrance n'est pas imposé.

2. Appareil de communication par radio selon la revendication 1, dans lequel ledit moyen de communication locale par radio est en outre agencé pour recevoir par la communication locale par radio une adresse de courrier électronique, et dans lequel ledit moyen de commande est agencé pour faire que le programme de courrier fixe l'adresse de courrier électronique reçue par ladite communication locale par radio.

3. Appareil de communication par radio selon la revendication 1, dans lequel ledit moyen de communication locale par radio est en outre agencé pour recevoir, par la communication locale par radio, de l'information destinée à désigner le programme de courrier et dans lequel ledit moyen de commande est apte à démarrer le programme de courrier désigné par l'information.

4. Appareil de communication par radio selon la revendication 1, dans lequel ledit moyen de commande est apte à faire que le programme de courrier transfère un courrier auquel sont annexées les données reçues par la communication locale par radio dans le cas où l'instant de délivrance est imposé.

5. Procédé de communication par radio pour un appareil de communication par radio, comprenant les étapes :
de réception de données via une communication locale par radio ;
le procédé étant **caractérisé par** les étapes :
de réception (S904A) , via la communication locale par radio, d'instructions au sujet d'un instant de délivrance des données ;
de démarrage (S1114A) d'un programme de courrier destiné à transférer les données reçues par ledit moyen de communication locale par radio via à un réseau public dans une opération de transfert automatique de courriers ;
dans le cas où l'instant de délivrance est imposé, de transfert (S916) des données reçues par la communication locale par radio ; et
dans le cas où l'instant de délivrance n'est pas imposé, de terminaison de l'opération de transfert automatique de courriers.

6. Procédé de communication par radio selon la revendication 5, comprenant en outre les étapes :
de réception d'une adresse de courrier électronique, par la communication locale par radio ; et
de fixation de l'adresse de courrier électronique fixée par ladite communication locale par radio.

7. Procédé de communication par radio selon la revendication 5, comprenant en outre les étapes :
de réception, par la communication locale par radio, d'une information destinée à désigner le programme de courrier ; et
de démarrage du programme de courrier désigné par l'information reçue.

8. Procédé de communication par radio selon la revendication 5, dans lequel ladite étape de transfert transfère un courrier auquel sont annexées les données reçues par la communication locale par radio, dans le cas où l'instant de délivrance est imposé.
